# EUROPÄISCHE PATENTSCHRIFT

(11) **EP 3 494 446 B1**
(45) Veröffentlichungstag und Bekanntmachung des Hinweises auf die Patenterteilung: **13.09.2023**
(21) Anmeldenummer: 17757693.1
(22) Anmeldetag: 04.08.2017
(51) Int. Cl.: G05D 1/02

(54) **VERFAHREN UND VORRICHTUNG ZUR STEUERUNG EINES AUTONOMEN MOBILEN ROBOTERS**
METHOD AND APPARATUS FOR CONTROLLING AN AUTONOMOUS MOBILE ROBOT
PROCÉDÉ DE COMMANDE D'UN ROBOT MOBILE AUTONOME ET DISPOSITIF DE MISE EN OEUVRE DU PROCÉDÉ

(30) Priorität: 05.08.2016 DE 102016114594; 05.08.2016 DE 102016114593
(43) Veröffentlichungstag der Anmeldung: 12.06.2019
(73) Patentinhaber: Robart GmbH, 4020 Linz (AT)
(72) Erfinder: ARTES, Harold, 4020 Linz (AT); SCHAHPAR, Michael, 4020 Linz (AT); SEETHALER, Dominik, 4020 Linz (AT); VOGEL, Reinhard, 4020 Linz (AT); BARTEL, Daniel, 4020 Linz (AT)
(74) Vertreter: Westphal, Mussgnug & Partner, Patentanwälte mbB
(86) Internationale Anmeldenummer: PCT/EP2017/069827
(87) Internationale Veröffentlichungsnummer: WO 2018/024897

(56) Entgegenhaltungen:
- WO-A1-2015/018437
- US-A1- 2003 030 398
- US-A1- 2013 206 177

## Beschreibung

### TECHNISCHES GEBIET

Die hier beschriebenen Ausführungsbeispiele betreffen einen autonomen mobilen Serviceroboter wie z.B. einen Roboter zur Bearbeitung einer Oberfläche (Reinigung von Böden) oder zur Überwachung und Inspektion eines Gebiets, welcher mittels einer oder mehrerer Karten navigiert.

### HINTERGRUND

In den letzten Jahren finden autonome mobile Roboter, insbesondere Serviceroboter, zunehmend Verwendung im Haushaltsbereich, beispielsweise zur Reinigung oder zur Überwachung einer Wohnung. Hierbei werden zunehmend Systeme eingesetzt, die eine Karte der Umgebung zur gezielten Navigation unter Verwendung eines SLAM-Algorithmus (engl.: *Simultaneous Localization and Mapping,* deutsch: simultane Lokalisierung und Kartenerstellung, siehe z. B. H. Durrant-Whyte and T. Bailey: "Simultaneous Localization and Mapping (SLAM): Part I The Essential Algorithms ", in: IEEE Robotics and Automation Magazine, Bd. 13, Nr. 2, S. 99 110, Juni 2006*)* erstellen. Dabei wird eine Karte sowie die Position des Roboters in der Karte mittels Sensoren (z.B. Laser-Range-Scanner, Kamera, Berührungssensoren, Hodometer, Beschleunigungssensoren, etc.) ermittelt. In vielen Fällen wird lediglich eine temporäre Karte erstellt, d.h. die Karte wird bei jedem Arbeitsvorgang neu erstellt.

Im Gegensatz zu temporären Karten ermöglicht die Verwendung dauerhaft abgespeicherter Karten effizientere Einsätze des Roboters, da eine wiederholte Erkundung der Umgebung zum Zwecke des Aufbaus einer Karte nicht notwendig ist und eine optimierte Strategie zur Verrichtung des Arbeitsvorgangs vorausberechnet werden kann. Für die Ermittlung der Strategie können zusätzliche umgebungsspezifische Informationen ermittelt und in der Karte gespeichert werden, sodass diese Informationen bei folgenden Arbeitsvorgängen wiederverwendet werden können. So kann der Roboter beispielsweise besonders verschmutzte Bereiche erkennen und in folgenden Arbeitsvorgängen diese Bereiche häufiger oder intensiver reinigen. Zusätzlich können nutzerspezifische Informationen wie beispielsweise Bereiche, die intensiv bearbeitet oder nicht befahren werden sollen, dauerhaft in der Karte gespeichert werden.

Den Vorteilen dauerhaft gespeicherter Karten stehen verschiedene Probleme gegenüber, die einen breiten Einsatz in privaten Haushalten bisher verhindern. Ein Problem kann beispielsweise darin bestehen, dass der Roboter von einem Nutzer in unterschiedlichen Umgebungen (z.B. in verschiedenen Stockwerken eines Hauses) eingesetzt wird. Somit muss der Roboter mehrere Karten handhaben und zuverlässig feststellen können, ob er sich in einer der Karten befindet und ggf. in welcher Karte er sich aktuell befindet. Diese Fähigkeit wird auch als globale Selbstlokalisierung (engl.: global self-localization, siehe z. B. *"*Active Global Localization for a Mobile Robot using Multiple Hypothesis Tracking", in: IEEE Transactions on Robotics and Automation, 2001) bezeichnet. Jedoch sind bekannte Verfahren zur globalen Selbstlokalisierung zeitaufwändig, wodurch die Durchführung des eigentlichen Arbeitsvorganges durch den Roboter verzögert wird.

Ein weiteres Problem kann beispielsweise darin bestehen, dass sich in einer Wohnung die Umgebung des Roboters und somit die zugehörige Karte laufend ändert. Diese Änderungen haben ihre Ursache unter anderem beispielsweise in verschoben Gebrauchsgegenständen wie z.B. Stühlen, offenen und geschlossenen Türen sowie neuen oder entfernten Einrichtungsgegenständen. Die der Erfindung zugrunde liegende Aufgabe kann folglich unter anderem darin gesehen werden, einen robusten Umgang mit dauerhaft gespeicherten Karten in sich ändernden Umgebungen zu gewährleisten und die Selbstlokalisierung des Roboters in den Karten zu verbessern. Die Publikation WO 2015/018437 offenbart ein Verfahren, bei dem der Roboter, in dem eine oder mehrere Karten von zu reinigenden Räumen gespeichert sind, in einem Raum platziert wird und eine Selbstlokalisierung durchführt, um zu ermitteln, ob er sich in einem zu reinigenden Raum befindet. Die Publikation US 2013/206177 A1 offenbart ein Verfahren zur Reinigung eines Raums, bei dem eine Vielzahl von Karten verwendet wird, die jeweils besondere Eigenschaften des Raums betreffen. Die Publikation US 2003/030398 A1 offenbart ein weiteres Verfahren zur Reinigung eines Einsatzgebiets, beim dem der Roboter entweder eine allgemeine Grundreinigung oder eine Grundreinigung einer spezifischen Etage durchführen kann.

### ZUSAMMENFASSUNG

Die oben genannte Aufgabe wird durch ein Verfahren gemäß Anspruch 1 sowie durch eine Steuereinheit gemäß Anspruch 7 gelöst. Verschiedene Ausführungsbeispiele und Weiterentwicklungen sind Gegenstand der abhängigen Ansprüche.

Es wird ein Verfahren zur Steuerung eines autonomen mobilen Roboters beschrieben. Gemäß einem Ausführungsbeispiel umfasst das Verfahren zur Steuerung eines autonomen mobilen Roboters das Speichern und Verwalten von zumindest einer Karte, die zumindest einem Robotereinsatzgebiet zugeordnet ist. Das Verfahren umfasst weiter die Entgegennahme eines Auftrags zur Durchführung einer Aufgabe durch den Roboter, wobei die Aufgabe zu einer ersten Gruppe von Aufgaben oder zu einer zweiten Gruppe von Aufgaben gehören kann. Zur Durchführung der Aufgabe navigiert der Roboter durch das Robotereinsatzgebiet. Aufgaben aus der ersten Gruppe sind mit einer kartenbasierten Information verknüpft, und der Roboter navigiert bei der Durchführung der Aufgabe anhand der gespeicherten Karte, auf die sich die kartenbasierte Information bezieht. Aufgaben aus der zweiten Gruppe sind nicht mit einer kartenbasierten Information verknüpft. Bei der Durchführung einer Aufgabe aus der zweiten Gruppe erstellt der Roboter vor und/oder während der Durchführung der Aufgabe eine neue Karte, wobei der Roboter einen Versuch einer globalen Selbstlokalisierung durchführt, wobei bei einer globalen Selbstlokalisierung die neue Karte auf Übereinstimmung mit mindestens einer der gespeicherten Karten überprüft wird und bestimmt wird, ob und wo sich der Roboter in mindestens einer der gespeicherten Karten befindet.

Des Weiteren wird eine Steuereinheit für einen autonomen mobilen Roboter beschrieben. Gemäß einem Ausführungsbeispiel weist die Steuereinheit für den Roboter zumindest einen Prozessor und zumindest einen Speicher mit Softwareinstruktionen auf, welche, wenn sie auf dem Prozessor ausgeführt werden, den autonomen mobilen Roboter dazu veranlassen das hier beschriebene Verfahren auszuführen.

### KURZE BESCHREIBUNG DER ABBILDUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen. In den Abbildungen zeigt:

Figur 1 ist ein Blockschaltbild, welches beispielhaft die Struktur eines autonomen mobilen Roboters darstellt.

Figur 2 illustriert ein schematisches Beispiel einer Nutzung eines Roboters in zwei verschiedenen Einsatzgebieten.

Figur 3 zeigt beispielhaft zwei Karten, welche die zwei in Fig. 2 dargestellten Robotereinsatzgebiete abdecken.

Figur 4 zeigt ein Beispiel für eine dauerhaft gespeicherte Karte und einer Veränderung der kartierten Umgebung durch das Schließen einer Tür.

Figur 5 zeigt anhand eines Beispiels die Detektion von beweglichen Objekten in einer dauerhaft gespeicherten Karte.

Figur 6 illustriert beispielhaft die Erzeugung einer Teilkarte, die ähnliche Bereiche eines Robotereinsatzgebiets oder zweier unterschiedlicher Robotereinsatzgebiete darstellt.

### DETAILLIERTE BESCHREIBUNG

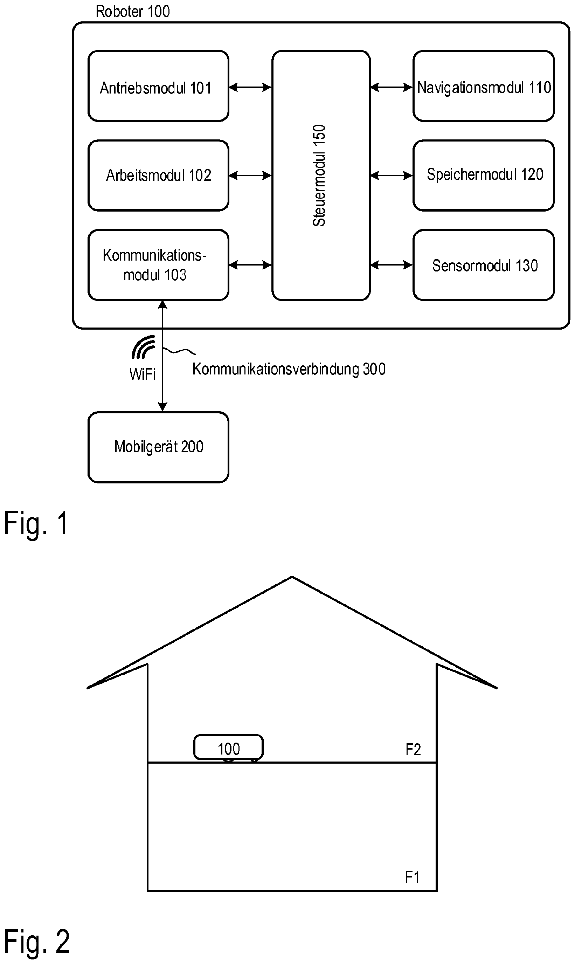

Figur 1 illustriert anhand eines Blockschaltbildes eine exemplarische Struktur eines autonomen mobilen Roboters 100. Der Roboter100 kann als Serviceroboter selbsttätig eine oder mehrere Aufgaben ausführen wie beispielsweise die Reinigung oder Überwachung eines Haushalts oder den Transport von Gegenständen innerhalb eines Haushalts. Die folgenden Ideen sind beispielhaft für den Einsatz eines Reinigungsroboters beschrieben. Sie sind jedoch nicht auf diesen beschränkt sondern anwendbar auf alle Bereiche, in denen eine autonome mobile Arbeitsmaschine eine Aufgabe in einem Gebiet verrichten soll, in dem sie sich selbsttätig mithilfe einer Karte bewegt (bzw. navigiert).

Generell ist eine vom Roboter 100 verwendbare (elektronische) Karte eine Datenstruktur zur Speicherung von ortsbezogener Information über ein Einsatzgebiet (*deployment area*) des Roboters und die für den Roboter relevante Umgebung in diesem Einsatzgebiet. Eine Art von ortsbezogener Informationen, die in einer Karte gespeichert werden können sind z.B. Information betreffend die Lage von Hindernissen (z.B. Wände, geschlossene Türen, Möbelstücke, eine Roboterbasisstation und andere bewegliche und unbewegliche Objekte, etc.) in einem Einsatzgebiet des Roboters. Die Lage von Hindernissen wird meist mittels Koordinaten definiert und vom Roboter z.B. mittels einem SLAM-Verfahren ermittelt (metrische und topologische Karte). Eine weitere Art ortsbezogener Informationen sind z.B Informationen, welche Flächenstücke bearbeitet also insbesondere gereinigt wurden, welche Position der Roboter während sein Tätigkeit angefahren hat etc.. Eine weitere Art von ortsbezogener Information ist z.B. die Aufteilung des Einsatzgebietes in mehrere Räume. Diese Aufteilung kann automatisiert durch den Roboter 100 erfolgen oder auch mit Hilfe des Nutzers, der die Aufteilung manuell vornehmen kann oder eine automatisiert vorgenommene Aufteilung manuell überarbeiten kann. Auch die Benennung der Räume (z.B. "Flur", "Küche", Wohnzimmer", "Schlafzimmer", etc.) kann in der Karte gespeichert sein. Eine weitere Art von ortsbezogener Informationen kann die weitere Unterteilung von einzelnen Räumen in Teilgebiete (z.B. "Essecke", "Eingangsbereich", etc.) sein, denen verschiedene Attribute (z.B. "Keep-Out", "schwer befahrbar", "stark verschmutzt" oder Art des Bodenbelags) oder Zeitpläne (z.B. Reinigungsintervalle) zugeordnet werden können. Für verschiedene Robotereinsatzgebiete (z.B. unterschiedliche Stockwerke eines Hauses können unterschiedliche Karten gespeichert werden).

Gemäß dem in Figur 1 dargestellten Beispiel weist der Roboter 100 verschiedene Module auf. Hierbei kann ein Modul eine eigenständige Baugruppe (Hardware) sein, eine Komponente einer Software zur Steuerung des Roboters, welche eine gewünschte Aufgabe (*task*) in einem bestimmten Robotereinsatzgebiet ausführt, oder eine Kombination von beidem (z.B. dedizierte Hardware mit angeschlossenen Peripheriekomponenten und geeigneter Soft-/Firmware). Die für das Verhalten des Roboters 100 zuständige Software kann in dem Steuermodul 150 des Roboters 100 (mittels entsprechendem Prozessor und Speicherelement) ausgeführt werden oder zumindest teilweise auf einen externen Rechner (z.B. Personal Computer, Server, etc.) ausgelagert sein, welcher beispielsweise in einem Heimnetzwerk oder über das Internet (Cloud) erreichbar ist. Wenn ein bestimmter Verfahrensschritt oder ein Teilschritt "vom Roboter" durchgeführt wird, so muss nicht notwendigerweise der gesamte Verfahrensschritt oder Teilschritt ausschließlich von der im Roboter befindlichen Hard- und Software erledigt werden. Es ist auch möglich, dass der Roboter 100 (meist das Steuermodul 150 des Roboters) die Durchführung des Verfahrensschrittes oder Teilschrittes veranlasst und die tatsächliche Durchführung des Verfahrensschrittes oder Teilschrittes von einer externen Hard- und/oder Software erledigt wird (z.B. von einem externen Computer oder Server, der mit dem Roboter über eine Datenverbindung kommuniziert). Des Weiteren sei angemerkt, dass die "Intelligenz" des Roboters auch auf die verschiedenen Module des Roboters verteilt sein kann und nicht notwendigerweise auf ein zentrales Steuermodul konzentriert werden muss. Wenn ein bestimmter Verfahrensschritt oder ein Teilschritt "vom Roboter" durchgeführt wird, so kann der Verfahrensschritt oder Teilschritt von einem Modul des Roboters (z.B. dem Steuermodul 150), von mehreren Modulen gemeinsam und/oder mit Hilfe externer Hard- und Software) erledigt werden.

Im vorliegenden Beispiel weist der mobile autonome Roboter 100 ein Antriebsmodul 101 auf, welches beispielsweise Elektromotoren, Getriebe und Räder aufweisen kann. Mit Hilfe des Antriebsmoduls 101 kann der Roboter 100 - theoretisch - jeden Punkt seines Einsatzgebiets anfahren. Der Roboter 100 kann des Weiteren ein Kommunikationsmodul 103 aufweisen, um eine Kommunikationsverbindung 300 zu einer Mensch-Maschine-Schnittstelle 200 (*human-machine interface,* HMI) herzustellen. Die Kommunikationsverbindung 300 kann beispielsweise eine direkte drahtlose Verbindung (z. B. Bluetooth), eine lokale drahtlose Netzwerkverbindung (z. B. WiFi oder Zig-Bee) oder eine Internetverbindung (z. B. zu einem Cloud-Service) sein. Beispiele für eine Mensch-Maschine-Schnittstelle 200 sind Tablet-PC, Smartphone, Smartwatch, Computer oder Smart-TV. In einigen Fällen kann die Mensch-Maschine-Schnittstelle 200 auch direkt in den Roboter integriert sein und kann über Tasten, Gesten und/oder Spracheingabe bedient werden. Die zuvor erwähnte externe Hard- und Software kann sich auch zumindest teilweise in der Mensch-Maschine-Schnittstelle 200 befinden.

Der Roboter 100 kann des Weiteren ein Arbeitsmodul 102 aufweisen, wie beispielsweise ein Reinigungsmodul zur Reinigung einer Bodenfläche (Bürste, Staubsaugvorrichtung) oder einen Greifarm zum Fassen und Transportieren von Gegenständen. In manchen Fällen wie beispielsweise bei einem Telepräsenzroboter oder einem Überwachungsroboter ist ein Arbeitsmodul 102 nicht notwendig. So besitzt ein Telepräsenzroboter ein komplexeres Kommunikationsmodul 103 mit einer Multimediaeinheit bestehend aus beispielsweise Mikrofon, Kamera und Bildschirm, um die Kommunikation zwischen mehreren räumlich weit entfernten Personen zu ermöglichen. Ein anderes Beispiel ist ein Überwachungsroboter, der auf Kontrollfahrten mit Hilfe eines Sensormoduls 130 bestimmte Ereignisse (z.B. Feuer, Licht, unautorisierte Personen, etc.) erkennen und beispielsweise eine Kontrollstelle entsprechend informieren kann.

Um autonom eine Aufgabe verrichten zu können, besitzt der Roboter 100 im vorliegenden Beispiel ein Navigationsmodul 110, mit welchen er sich in seiner Umgebung beispielsweise anhand von Navigationsfeatures (*navigation features,* d.h. Merkmale, an denen sich ein Roboter orientieren kann), wie beispielsweise Landmarken (*land marks,* z.B. Möbelstücke, Türrahmen, Ecken eines Raumes, etc.), welche mit Hilfe des Sensormoduls 130 erfasst werden können, orientieren und so navigieren kann. Das Navigationsmodul 110 kann beispielsweise mit einer Hindernisvermeidungsstrategie und/oder einem SLAM-Algorithmus arbeiten und/oder mit einer oder mehreren Karten des Robotereinsatzgebiets. Die Karte(n) des Robotereinsatzgebiets kann der Roboter während eines Einsatzes neu erstellen oder eine zu Beginn des Einsatzes schon vorhandene Karte nutzen. Eine vorhandene Karte kann bei einem vorhergehenden Einsatz, beispielsweise einer Erkundungsfahrt, vom Roboter selber erstellt worden sein, oder von einem anderen Roboter und/oder Menschen zur Verfügung gestellt werden und wird beispielsweise in einem Speichermodul 120 dauerhaft (permanent) gespeichert. Das Speichermodul 120 besteht vorzugsweise aus einem nicht-flüchtigen Speicher (z.B. eine Solid-State-Disk, SSD). Alternativ können die dauerhaft zu speichernden Karten des Robotereinsatzgebiets auch außerhalb des Roboters gespeichert werden, beispielsweise auf einem Computer im Haushalt des Nutzers des Roboters (z. B. Tablet-PC, Home-Server) oder auf einem über das Internet erreichbaren Computer (z. B. Cloud-Server).

Das Sensormodul 130 kann beispielsweise einen Sensor zur Messung von Abständen zu Objekten in der Umgebung wie beispielsweise ein optischer und/oder akustischer Sensor, der mittels Triangulation oder Laufzeitmessung eines ausgesandten Signals arbeitet (Triangulationssensor, Time-Of-Flight-Kamera, Laserscanner, Ultraschallsensoren) aufweisen. Andere typische Beispiele für geeignete Sensoren sind Kameras, taktile Sensoren, Beschleunigungssensoren, Drehratensensoren, Hodometer und/oder Boden-Abstands-Sensoren.

Um ein Arbeiten ohne zahlreiche Nutzerinteraktionen zu ermöglichen, besitzt der Roboter beispielsweise eine Basisstation 190, zu welcher er automatisch nach Erledigung einer Aufgabe zurückkehrt. An dieser kann er beispielsweise seinen Akku aufladen und/oder (bei einem Reinigungsroboter) aufgenommen Schmutz entsorgen. Der Roboter kann eine zentrale Steuereinheit aufweisen, welche das Steuermodul 150 und optional noch weitere der oben genannten Module umfassen kann. In einem Beispiel umfasst die Steuereinheit z.B. das Steuermodule 150, das Navigationsmodul 110 und zumindest Teile des Sensormoduls 130.

Figur 2 zeigt ein mögliches Einsatzszenario für einen autonomen mobilen Serviceroboter 100, welcher in zwei Etagen F1, F2 eines Hauses eingesetzt wird. Insbesondere sind die zwei Robotereinsatzgebiete F1, F2 räumlich so voneinander getrennt, dass der Roboter nicht selbsttätig von einem in das andere Einsatzgebiet gelangen kann. Ein Umsetzen von dem ersten Robotereinsatzgebiet F1 in das zweite Robotereinsatzgebiet F2 erfolgt beispielsweise manuell durch einen menschlichen Nutzer oder unter Zuhilfenahme weiterer technischer Hilfsmittel wie einem Fahrstuhl. Es sei angemerkt, dass die Robotereinsatzgebiete nicht zwingend Etagen eines Hauses entsprechen müssen. So ist es ebenfalls möglich, dass einzelne Räume innerhalb einer Wohnung durch hohe Türschwellen oder Stufen voneinander getrennt sind, welche der Roboter nicht ohne fremde Hilfe überwinden kann. Die Robotereinsatzgebiete können auch an unterschiedlichen geografischen Standorten liegen wie beispielsweise in zwei verschiedenen Häusern (z.B. Stadthaus, Wochenendhaus) gelegen sein.

In derzeit kommerziell erhältlichen Systemen kann der Roboter 100 in verschiedenen Robotereinsatzgebieten eingesetzt werden, wobei er sich bei jedem Einsatz eine neue temporäre Karte aufbaut. Dies ist jedoch mit Ineffizienz, geringer Flexibilität und mangelnder "Intelligenz" und Lernfähigkeit des Roboters verbunden. Um diese Nachteile auszuräumen, können die vom Roboter 100 erstellten Karten dauerhaft gespeichert werden, und in folgenden Robotereinsätzen wieder verwendet werden. Hierdurch ergeben sich - unter anderem - z.B. die folgenden Vorteile:
- Effizienzsteigerung durch schnellere Abarbeitung einer Aufgabe und folglich geringerer Energiebedarf insbesondere aufgrund
   - des Wegfalls der erneuten Erkundung der Umgebung zum Zwecke der Kartenerstellung und
   - der Möglichkeit der Vorausplanung eines effizienten Arbeitsablauf auf Basis einer bekannten Karte;
- Verbesserte und vereinfachte Nutzerinteraktion mittels der Karte, insbesondere durch
   - Erkennen und benennen von Räumen und Teilgebieten (z. B. "Wohnzimmer", "Schlafzimmer", "Essecke"),
   - Gezielte Arbeitsaufträge betreffend einen vorgebbaren Ort wie z.B. einen bestimmten Raum (z. B. "Reinige Wohnzimmer"),
   - Eintragen von Gefahrenzonen ("Keep-Out-Areas"), welche der Roboter nicht selbsttätig befahren darf, und
   - Eintragen ortsbezogener Reinigungsarten (z. B. "reinige Essecke zwei mal täglich", "reinige den Flur mit hoher Saugleistung");
- Lernfähigkeit des Roboters: Beispielsweise kann sich der Roboter schnell verschmutzende Bereiche merken und diese häufiger reinigen. Des Weiteren kann der Roboter sich Orte im Einsatzgebiet merken, an denen er steckengeblieben ist, wodurch er zukünftig diese Orte meiden oder vorsichtig befahren kann.

Damit der Roboter zuverlässig mit einer oder mehr dauerhaft gespeicherten Karten umgehen kann, benötigt er zumindest die folgenden Fähigkeiten:
1. Erstellen von neuen Karten;
2. Bestimmen, ob und ggf. wo er sich den dauerhaft gespeicherten Karten befindet (globale Selbstlokalisierung), und
3. Navigieren mit Hilfe der Karte (mitführen der eigenen Position in der Karte, d.h. lokale Selbstlokalisierung).

Sowohl für die erste als auch die dritte Fähigkeit kann ein SLAM-Verfahren genutzt werden. Hierbei bestimmt der Roboter fortwährend seine Position auf Basis seiner Bewegung und den bekannten Kartendaten. Da hierbei die Position des Roboters in der Karte immer auf Basis einer vorhergehenden bekannten Position ermittelt wird, spricht man hierbei von "lokaler Lokalisierung" oder "Position Tracking". Diese lokale Lokalisierung basiert also auf einem "Vorwissen" über die zuletzt bekannte Position. Wenn der Roboter mit seinen Sensoren neue Navigationsfeatures der Umgebung (z. B. Hindernisse wie Wände oder Möbel) erkennt, welche noch nicht in der Karte verzeichnet sind, so fügt er diese den Kartendaten hinzu. Hierdurch ist es möglich eine neue Karte zu erstellen oder eine vorhandene Karte an eine variable Umgebung anzupassen. Dies ermöglicht eine robuste Navigation mit einer Karte in einer variablen Umgebung in der sich z. B. Menschen oder Tiere bewegen, Türen geöffnet oder geschlossen werden, oder Hindernisse wie Stühle oder herumstehende Schuhe verschoben werden.

Die zweite Fähigkeit ist von Bedeutung, wenn der Roboter versetzt oder neu eingeschaltet wird, und er prüfen soll, ob und ggf. wo er sich in einer der existierenden Karten befindet. Diese Aufgabenstellung wird auch als *"lost-robot problem"* oder *"drop-off problem"* bezeichnet. Diese Fähigkeit zur Bestimmung der Position des Roboters ohne oder nur mit begrenztem Vorwissen (über unmittelbar vorangegangene Positionen des Roboters in der Karte) wird in Abgrenzung zur lokalen Lokalisierung in SLAM-Verfahren "globale (Selbst-)Lokalisierung" ("global (self-)localization") genannt (siehe z. *B.* D. Filliat and J. Meyer: "Map-based navigation in mobile robots: I. A review of localization strategies ",in: Cognitive Systems Research, Vol. 4(4), 243-282, Dezember 2003*).*

Es sind zahlreiche Verfahren zur globalen Selbstlokalisierung bekannt. Beispielsweise werden hierbei Algorithmen der Mustererkennung (*"pattern recognition and matching"*) eingesetzt. Zur Durchführung der Selbstlokalisierung kann der Roboter z.B. beginnen, eine neue Karte aufzubauen und auf Übereinstimmung mit den für die Selbstlokalisierung relevanten Karten zu überprüfen. Hierzu wird beispielsweise eine abstrakte Metrik definiert, die den Unterschied der Karten abhängig von verschieden möglichen Positionen des Roboters bewertet, wobei ein Wert von Null eine perfekte Übereinstimmung und somit erfolgreiche Selbstlokalisierung beschreibt. Alternative Varianten können eine Wahrscheinlichkeit, dass der Roboter sich in einer Karte an einer bestimmten Position befindet, bestimmen, wobei ein Wert von eins eine sichere erfolgreiche Selbstlokalisierung beschreibt. In der Praxis wird dieser Idealwert kaum erreicht, weshalb ein Schwellwert genutzt wird, bei dessen Unterschreitung (bzw. Überschreitung) eine erfolgreiche Selbstlokalisierung angenommen wird. Sind die Abweichungen zwischen der Umgebung des Roboters und den bestehenden Karten zu groß, so wird festgestellt, dass sich der Roboter nicht in einem kartierten Einsatzgebiet befindet.

Damit der Roboter 100 eine möglichst gute Ausgangsbasis für das Arbeiten mit einer dauerhaft gespeicherten Karte hat, kann der Roboter 100 eine Lernfahrt durchführen. Vor der Lernfahrt kann der Nutzer z.B. aufgefordert werden, das Robotereinsatzgebiet aufzuräumen, und alle Türen zu öffnen, so dass der Roboter 100 eine vollständige und möglichst störungsfreie Karte seines Einsatzgebiets beispielsweise mit einem SLAM-Verfahren aufbauen kann. Während der Lernfahrt werden beispielsweise mit abstandsmessenden Sensoren die Position aller Hindernisse (z. B. Wände, Möbel) im Robotereinsatzgebiet vermessen. Alternativ oder zusätzlich kann der Roboter die gesamte befahrbare Fläche des Robotereinsatzgebiets abfahren. Insbesondere kann die Lernfahrt mit der Durchführung einer Aufgabe wie beispielsweise einer Reinigung verbunden werden. Beispielsweise kann der Nutzer während und/oder nach der Lernfahrt dem Roboter Hinweise über seine Umgebung geben, wie z. B. die Benennung des Raumes in dem er sich gerade befindet, oder dass er einen gewissen Bereich des Raumes nicht befahren soll (Definition einer "Keep-Out-Area").

Nachdem die Lernfahrt abgeschlossen ist, können mit Hilfe des Nutzers oder automatisiert weitere positions- und kartenbasierte Informationen ermittelt werden. So kann dem Nutzer die Karte auf der Mensch-Maschine-Schnittstelle 200 (z.B. einem Tablet-Computer, vgl. Fig. 1) gezeigt werden, so dass dieser die Karte bestätigen, Räume identifizieren und benennen kann. Die angezeigte Karte kann vereinfachte und nachbearbeitete Daten, die während der Lernfahrt ermittelt wurden, darstellen. Alternativ kann die Karte automatisiert auf Konsistenz geprüft und eine Raumaufteilung vorgenommen werden. Beispielsweise können mit Hilfe einer am Roboter angebrachten Kamera (z.B. Teil des Sensormoduls 130) Türdurchgänge erkannt werden und basierend auf den erkannten Türdurchgängen eine automatisierte Raumaufteilung generiert werden. In beiden Fällen ist das Ziel, Fehler bei der Kartenerstellung zu erkennen und zu vermeiden und die Karte für eine (spätere) Nutzerinteraktion aufzubereiten. Am Ende werden zu dem Einsatzgebiet (in dem die Lernfahrt durchgeführt wurde) Kartendaten abgespeichert, die sowohl den Zustand, welcher durch das SLAM-Verfahren ermittelt wurde, als auch zusätzliche insbesondere personalisierte Informationen (z.B. die Unterteilung und Benennung von Räumen) repräsentieren. Diese Daten können verschieden Abstraktionsebenen beschreiben, wie z.B. metrische Daten (z. B. Position von Hindernissen), topologische Daten (z. B. Lagenbeziehung erkannter Räume), und semantische Daten (z. B. Benennung der Räume). In alternativen Ausführungen kann dem Roboter 100 die Karte auch von einem anderen Roboter (weil dieser z.B. schon eine Lernfahrt durchgeführt hat) und/oder durch den Nutzer zur Verfügung gestellt werden.

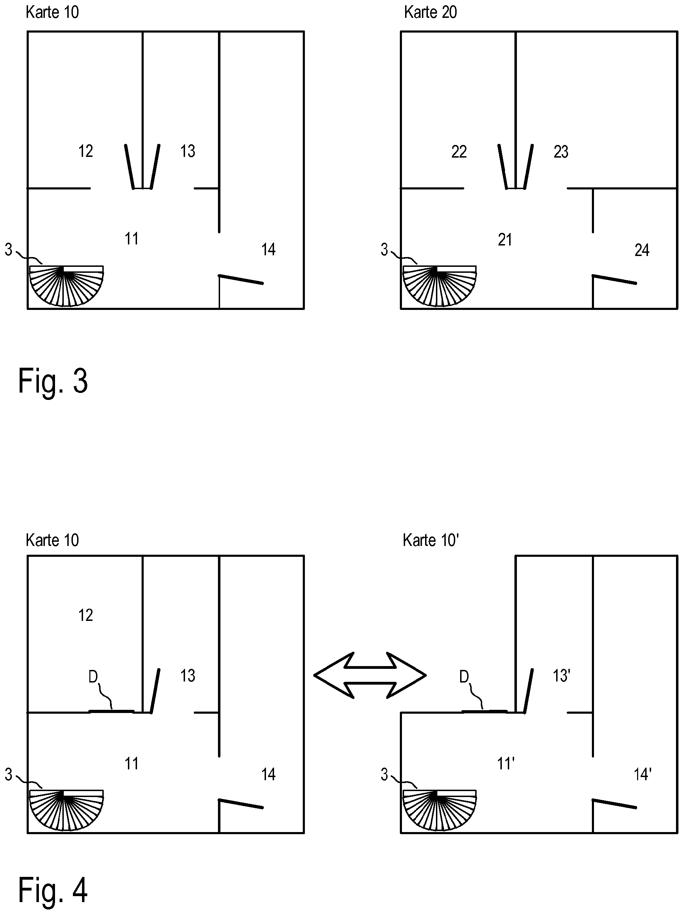

Figur 3 zeigt beispielhaft zwei Karten 10, 20, die der Roboter beispielsweise in den Etagen F1 und F2 des Hauses aus Fig. 2 aufgebaut hat. Diese Karten 10, 20 kann der Roboter dauerhaft (permanent) in einem nicht-flüchtigen Speichermodul 120 speichern (siehe Fig. 1). Das Speichermodul 120 kann z.B. einen Speicherchip wie z.B. einen Flash-Speicher, der im Roboter 100 verbaut ist, beinhalten. Alternativ oder zusätzlich sind die Karten auf einem externen Gerät wie einem Computer (z. B. Home- Server) oder einem Cloud-Service (Internet-Server) gespeichert. Insoweit der Roboter 100 einfachen und dauerhaften Zugriff (z. B. über eine drahtlose Netzwerkverbindung oder über das Internet) auf die so gespeicherten Karten 10, 20 besitzt, wird diese Form der nicht-lokalen Speicherung ebenfalls als nicht-flüchtiger Speicher angesehen. Im Zusammenhang mit den hier beschriebenen Ausführungsbeispielen ist eine Karte dauerhaft (permanent) gespeichert, wenn sie für die Wiederverwendung in einem oder beliebig vielen Robotereinsätzen (z.B. nach einem Abschalten und Wiedereinschalten des Roboters 100) in einem nicht-flüchtigen Speicher gespeichert ist. Im Gegensatz dazu werden temporäre Karten üblicherweise nur in einem flüchtigen Speicher (z.B. einem RAM, Random Access Memory) gehalten. Unabhängig vom verwendeten Speichermedium stehen temporäre Karten normalerweise nicht für die wiederholte Wiederverwendung in späteren Robotereinsätzen zur Verfügung.

Nachdem eine oder mehr Karten 10, 20 dauerhaft gespeichert wurden, können dem Roboter mit diesen Karten verknüpfte Aufgaben (z. B. "Reinige") erteilt werden. Dies geschieht beispielsweise durch ein direktes Nutzerkommando (z.B. ein Arbeitsauftrag an den Roboter zur Durchführung einer bestimmten Aufgabe) über die Mensch-Maschine-Schnittstelle 200, durch eine Kalenderfunktion, die zu einem festlegbaren Zeitpunkt ein festlegbares Kommando gibt, oder durch eine in einer Heimautomatisierungsanlage einprogrammierte Aktion ("Smart-Home"). Der Ausgangspunkt dieser Aufgabe ist beispielsweise ein vom Nutzer gewählter Ort oder die Basisstation 190 des Roboters.

Im Allgemeinen können vom Roboter durchzuführende Aufgaben *(Tasks)* und die dazugehörigen Aufträge an den Roboter in zwei Gruppen eingeteilt werden. Zur ersten Gruppe von Aufgaben bzw. Aufträgen gehören Aufträge und Aufgaben, die mit einer kartenbasierten Information verknüpft sind (z.B. mit einer bestimmten von mehreren Karten, einem bestimmten Bereich einer Karte (z.B. einem bestimmten Raum) oder einer konkreten Position in der Karte. Zur zweiten Gruppe von Aufgaben bzw. Aufträgen gehören Aufträge und Aufgaben, die nicht mit einer kartenbasierten Information verknüpft sind. Sofern der Roboter einen Arbeitsauftrag aus der ersten Gruppe (Aufgabe verknüpft mit kartenbasierter Information) erhält, kann er gemäß einem Ausführungsbeispiel mit jeder Karte navigieren, zu der die kartenbasierte Information gehört. In diesem Fall können die in der Karte eingetragenen Attribute (z.B. Keep-Out-Bereiche, schwer befahrbare Bereiche, etc.) berücksichtigt werden. Sofern der Roboter einen Arbeitsauftrag aus der zweiten Gruppe (Aufgabe ohne Verknüpfung mit einer Karte) erhält, kann er bei der Durchführung der Aufgabe eine neue Karte erstellen. In diesem Fall werden die in einer eventuell vorhandenen Karte eingetragenen Attribute nicht berücksichtigt. Alternativ kann auch geprüft werden, ob er Roboter in einem kartierten Einsatzgebiet ist, und, falls ja, kann er die dem kartierten Einsatzgebiet zugeordnete Karte zur Navigation verwenden.

Bevor der Roboter 100 mit der Durchführung einer Aufgabe (*Task*) beginnt, kann z.B. geprüft werden,
1. ob mit der Aufgabe ein kartiertes Einsatzgebiet F1, F2 verknüpft ist und falls ja
2. ob der Roboter 100 sich in dem mit der Aufgabe verknüpften Einsatzgebiet F1, F2 befindet und falls ja,
3. wo der Roboter 100 sich in dem mit der Aufgabe verknüpften Einsatzgebiet F1, F2 befindet (globale Selbstlokalisierung).

Die Aufgabe kann beispielsweise allgemein sein und in allen Karten oder sogar in nicht kartierten Einsatzgebieten erfüllbar sein. Beispielsweise ist dies ein Kommando, um das aktuelle Einsatzgebiet zu reinigen ("Reinige"). In diesem Fall entsprechen die Punkte 2 und 3 einer globalen Selbstlokalisierung in allen gespeicherten Karten. Wenn hierbei festgestellt wird, dass der Roboter sich in einem nicht kartierten Einsatzgebiet befindet, so würde er zur Abarbeitung seiner Aufgabe eine neue Karte erstellen. Ein weiteres Beispiel für solch eine allgemeine Aufgabe ist, die gesamte befahrbare Fläche zu reinigen ("Reinige Alles"), insbesondere ohne auf in einer Karte von einem Nutzer definierte "Keep-Out-Areas" zu achten. Vor dem Beginn der Ausführung derartiger Aufgaben kann geprüft werden, ob und wo der Roboter sich in einem kartierten Einsatzgebiet F1, F2 befindet, oder es kann immer eine neue Karte erstellt werden.

Die vom Roboter durchzuführende Aufgabe kann auch mit einer konkreten Position verknüpft sein (z.B. "Reinige Wohnzimmer"). In diesem Fall wird geprüft, welche Karte hierfür zu verwenden ist (z. B. die Karte jenes Einsatzgebietes, in dem das Wohnzimmer liegt). In einer einfachen Ausgestaltung wird mit jeder Aufgabe direkt die zu verwendende Karte mitgeteilt. So würde es beispielsweise je ein Kommando für die Aufgaben "Reinige Etage F1" und "Reinige Etage F2" für die vollständige Reinigung der Einsatzgebiete F1, F2 geben.

In Punkt 2 wird zunächst geprüft, ob es plausibel ist, dass sich der Roboter 100 in dem benannten Einsatzgebiet befindet (Plausibilitätsprüfung). Diese Plausibilitätsprüfung kann z.B. basierend auf der letzten bekannten Position des Roboters (z.B. dem letzten Einsatzgebiet des Roboters) und basierend auf dem Ergebnis einer Detektion einer Versetzung des Roboters erfolgen. Beispielsweise war der letzte Einsatz des Roboters in der Etage F1. Dann ist es plausibel, wenn der nachfolgende Einsatz ebenfalls in der Etage F1 ist, sofern der Roboter kein Versetzen detektiert hat und zwischendurch auch nicht vollständig abgeschaltet wurde. Wenn der Roboter seit dem letzten Einsatz (z.B. mittels eines Sensors) detektiert hat, dass er vom Nutzer versetzt wurde, so ist auch ein Einsatz in Etage 2 plausibel. Wenn der Roboter keine Versetzung seit dem letzten Einsatz detektiert hat, so ist ein Einsatz in Etage 2 nicht plausibel. In solch einem Fall kann der Roboter beispielsweise eine Nachricht an den Nutzer senden (z. B. "Bitte prüfe meinen Standort.").

Anschließend wird die Position des Roboters in der zumindest einen zu verwendenden Karte (globale Selbstlokalisierung) ermittelt. Wenn die Selbstlokalisierung nicht erfolgreich ist, kann der Roboter (wie zuvor) den Nutzer informieren, oder die Aufgabe auf Basis einer neu erstellten temporären Karte ausführen.

Bekannte Systeme nutzen die (z.B. mittels globaler Selbstlokalisierung) ermittelte gespeicherte Karte direkt für die Navigation des Roboters, wobei es zwei unterschiedliche Herangehensweisen gibt. Entweder wird die Karte unverändert gelassen oder sie wird Veränderungen der Umwelt angepasst (Update der gespeicherten Karte). Beider Herangehensweisen haben Ihre Vor- und Nachteile. So ist die Voraussetzung für eine zuverlässige Navigation, dass die Karte das Robotereinsatzgebiet möglichst genau repräsentiert. Somit kann es vorteilhaft sein, wenn Veränderungen wie beispielsweise eine neue Position der Basisstation 190 oder neue Hindernisse in die Karte aufgenommen werden. Jedoch kann dies ebenfalls dazu führen, dass vorübergehende Änderungen, wie beispielsweise eine geschlossene Tür in die Karte aufgenommen werden. Dies würde dazu führen, dass in einem nachfolgenden Einsatz kein Weg für den Roboter in den hinter der Tür liegenden Raum geplant werden könnte, ohne diesen nochmals erkundet zu haben. Im schlimmsten Fall könnte die Karte durch Probleme des Roboters wie Messfehler oder der Verwendung der Karte in einem falschen Einsatzgebiet für zukünftige Robotereinsätze unbrauchbar werden.

Um derartige Probleme zu vermeiden, kann am Beginn eines Arbeitseinsatzes eine Arbeitskopie zumindest eines Teils der dauerhaft gespeicherten Karte 10, 20 erstellt werden. Somit kann sichergestellt werden, dass die während einer Lernfahrt ermittelte Karte (Referenzkarte) nicht verändert wird, und bei jedem Einsatz diese vollständig zur Verfügung steht. Gleichzeitig können in der Arbeitskopie alle Veränderungen der Umgebung berücksichtigt werden. Dies bedeutet insbesondere herauslöschen von nicht mehr existierenden Navigationsfeatures, neu positionieren von verschobenen und hinzufügen von neuen Navigationsfeatures. Wie erwähnt umfasst das Erstellen einer Arbeitskopie nicht notwendiger weise das vollständige Kopieren aller Informationen, die als Karte 10, 20 dauerhaft gespeichert sind. In manchen Fällen kann eine Kopie der für die Navigation notwendigen Informationen (z.B. die anfangs mittels SLAM ermittelten Hindernisse) genügen.

Die Arbeitskopie kann zumindest die für die Navigation relevanten Kartendaten umfassen. Diese umfassen beispielsweise die Lage von wesentlichen Hindernissen (z. B. Wände, Schränke) und/oder die Lage von Navigationsfeatures (Merkmale, an denen sich der Roboter orientieren kann). Kartendaten die sich nicht ändern oder schnell ändern, müssen nicht in die Arbeitskopie übernommen werden. So ist beispielsweise die Raumaufteilung eine Information, die für die Orientierung und Navigation des Roboters nicht notwendig ist, und welche sich nicht ändert. Des Weiteren ist beispielsweise die Position von Stühlen oder Schuhen sehr variabel, so dass sie keinen Informationsgewinn für die Navigation des Roboters geben, weshalb sie nicht in die Arbeitskopie übernommen werden muss (sofern diese Information überhaupt in den dauerhaft abgespeicherten Karten enthalten ist). Bei dem oben beschriebenen Vorgehen kann von einem vorhergehenden Robotereinsatz noch eine alte Arbeitskopie vorhanden sein. Diese kann gelöscht werden, wenn eine neue Arbeitskopie erstellt wird.

Die alte Arbeitskopie kann zur Prüfung benutzt werden, ob und wo der Roboter 100 in dem angegebenen Einsatzgebiet ist, wodurch weiter oben erwähnte Plausibilitätsprüfung einfach möglich ist. Insbesondere kann die Position des Roboters von der alten Arbeitskopie der Karte 10 oder 20 in die neue übertragen werden. Das ist dann möglich, wenn beide Arbeitskopien auf derselben dauerhaft gespeicherten Karte basieren und die Roboterposition gültig ist (z.B. wenn der Roboter nicht versetzt oder abgeschaltet wurde). Hierdurch kann die globale Selbstlokalisierung entfallen und der Roboter 100 sofort seine Aufgabe aufnehmen.

In einem möglichen Ausführungsbeispiel kann geprüft werden, ob die alte Arbeitskopie der Karte gelöscht werden soll oder wiederverwendet werden kann. Bei Aufgaben, die auf ein bestimmtes Gebiet begrenzt sind, kann es sinnvoll sein, eine bestehende alte Arbeitskopie weiterzunutzen. Eine derartige Aufgabe kann z.B. sein, einen Raum oder einen Teil eines Raumes zu reinigen. Wenn dieser Raum in der aktuellen Arbeitskopie der Karte erreichbar ist, so kann der Roboter diese weiternutzen, um seine Aufgabe zu erfüllen. Eine neue Arbeitskopie kann z.B. dann angelegt werden, wenn die Aufgabe einen in der aktuellen Arbeitskopie nicht erreichbaren Bereich umfasst, wie beispielsweise einen Raum, welcher beim letzten Einsatz des Roboters durch eine verschlossene Tür nicht erreichbar war. Bei einigen Aufgaben kann es immer sinnvoll sein, die alte Arbeitskopie zu löschen und eine neue Arbeitskopie der dauerhaft gespeicherten Karte 10 bzw. 20 anzulegen. Dies ist beispielsweise der Fall, wenn die Aufgabe des Roboters 100 das Anfahren aller Bereiche des Einsatzgebiets umfasst, wie dies beispielsweise bei einer vollständigen Reinigung oder einer vollständigen Inspektion des Robotereinsatzgebiets geschieht.

Es ist ebenfalls sinnvoll die alte Arbeitskopie zu löschen und eine neue Arbeitskopie der dauerhaft gespeicherten Karte 10, 20 anzulegen, wenn davon auszugehen ist, dass sich die Umgebung aufgrund menschlicher Aktivität geändert hat, also insbesondere Türen zu Räumen geöffnet bzw. geschlossen wurden. Hierfür kann beispielsweise eine feste Zeitspanne ohne Arbeitsauftrag (Kommando an den Roboter zum Durchführen einer bestimmten Aufgabe) für den Roboter (z. B. 5 Stunden) festgelegt werden, nach deren Ablauf für einen neuen Arbeitsauftrag der Roboter eine neue Arbeitskopie anlegt. Weitere Entscheidungsmerkmale können z.B. die Uhrzeit oder die Anwesenheit und Aktivität von Personen im Robotereinsatzgebiet sein. Beispielsweise kann der Roboter dazu ausgebildet sein, anwesende Personen zu detektieren (z. B. über im WLAN erreichbare persönliche mobile Geräte wie Smartphones oder über eine Personenerkennung mittels Kamera). Wenn keine der im Haushalt lebenden Person anwesend ist oder diese schlafen, sind keine Veränderungen im Einsatzgebiet zu erwarten, weshalb eine weitere Nutzung der alten Arbeitskopie nützlich sein kann. Wenn Personen das Robotereinsatzgebiet (z.B. das Haus) verlassen oder betreten, kann es zu größeren Veränderungen kommen. So kann beispielsweise ein Nutzer beim Verlassen seiner Wohnung eine Tür zu einem Zimmer öffnen mit der Erwartung, dass der Roboter dieses in seiner Abwesenheit reinigt. In diesem Fall ist es wichtig, dass der Roboter die alte Arbeitskopie, in der die Tür als geschlossen markiert ist, durch eine neue ersetzt, in der alle Zimmer als erreichbar markiert sind.

Es kann vorkommen, dass der Roboter in der Phase der globalen Selbstlokalisierung die Karte und/oder seine Position in dieser falsch bestimmt. Dies kann beispielsweise dadurch geschehen, dass der Roboter sich in der Etage F1 im Flur 11 befindet, und er das Kommando erhält, in einem Raum 24, der zur Etage F2 gehört und in der Karte 20 verzeichnet ist, eine Aufgabe zu erledigen wie beispielsweise den Raum 24 zu reinigen. Da hierbei dem Roboter die zu verwendende Karte 20 mitgeteilt wird, erfolgt die Selbstlokalisierung ausschließlich in dieser. Aufgrund der starken Ähnlichkeit des Flurs 11 in Karte 10 und des Flurs 21 in Karte 20, kann der Roboter bei der globalen Selbstlokalisierung eine Position für Karte 20 ermitteln, obwohl er sich in der anderen Etage F1 befindet. Wenn der Roboter sich in den Raum 14 bewegt (in der Annahme er bewege sich in den Raum 24), würden große Abweichungen zwischen der verwendeten Karte 20 und dem dort kartierten Raum 24 und der tatsächlichen Umgebung im Raum 14 detektiert werden. Innerhalb des SLAM-Verfahrens würde das Navigationsmodul 110 des Roboters 100 die Arbeitskopie der dauerhaft gespeicherten Karte 20 dahingehend korrigieren, dass die Position der Trennwände an die Gegebenheiten der Räume 13 und 14 angepasst werden. Durch die Verwendung einer Arbeitskopie können somit die Unterschiede zwischen dauerhaft gespeicherter Karte und Arbeitskopie mit einem normalen Navigationsalgorithmus korrigiert werden ohne, dass die dauerhaft gespeicherte Karte beschädigt wird. Im vorliegenden Beispiel würde der Roboter zwar seine Aufgabe im "falschen" Stockwerk durchführen (nämlich im Raum 14 statt im Raum 24). Die Verwendung der Arbeitskopie kann jedoch eine Detektion dieses Fehlers durch Vergleich der Arbeitskopie mit der dauerhaft gespeicherten Karte ermöglichen. Dadurch dass die dauerhaft gespeicherten Karte durch den Fehler (des Benutzers) nicht beschädigt wird, ist der Roboter robuster im Hinblick auf Bedienfehler durch den Nutzer.

Darüber hinaus ermöglicht die Verwendung der Arbeitskopie während der Erledigung einer Aufgabe eine laufende Überprüfung, ob die Selbstlokalisierung richtig oder falsch war (also ob sich der Roboter tatsächlich in dem zu der genutzten Karte gehörigen Gebiet befindet). Hierzu kann beispielsweise die sich während der Navigation ändernde Arbeitskopie der Karte 20 fortlaufend mit der dauerhaft gespeicherten Karte 20 verglichen werden. Hierzu können beispielsweise die gleichen Algorithmen verwendet werden, wie sie bei der globalen Selbstlokalisierung zur Bestimmung der Position des Roboters in der Karte verwendet werden. Alternativ oder zusätzlich können auch die notwendigen Anpassungen in der Arbeitskopie der Karte 20 bewertet werden. So ist beispielsweise ein Detektieren einer neuen bzw. fehlenden Wand ein deutliches Zeichen für die Nutzung einer falschen Karte und/oder Position (wie im Fall einer Verwechslung von Raum 14 und Raum 24). Kleine Änderungen hingegen sind durch den Alltag und/oder durch übliche Mess- und Navigationsfehler im Rahmen des Normalen.

Um den Fall der Verwendung einer falschen Karte (also einer Karte von einem anderen Einsatzgebiet) von jenen Fällen unterscheiden zu können, in denen Abweichungen zwischen der gespeicherten Karte und dem gemessenen Ist-Zustand der Umgebung von den erwähnten Mess- und Navigationsfehlern verursacht werden, können metrische und topologische Maßfunktionen genutzt werden. Metrische Maße erfassen beispielsweise die Größe (Länge) von neu erkannten oder fehlenden Navigationsfeatures oder die Fläche der von diesen Änderungen betroffenen Bereiche. Wenn beispielsweise der Roboter (wie zuvor) sich in der Etage F1 befindet jedoch mit der Karte 20 der Etage F2 navigiert, so wird er feststellen, dass sich die Fläche des kartierten Raumes 24 (der ja in Wirklichkeit Raum 14 ist) mehr als verdoppelt hat. Gleichzeitig wird die Fläche des Raumes 23 (der ja in Wirklichkeit Raum 13 ist) um den gleichen Betrag verkleinert. Topologische Maße erfassen die relative Lage der erkannten Räume und der erkannten Raumgrenzen. So ist beispielsweise die Raumgrenze zwischen Raum 13 und Raum 14 in Karte 10 vertikal während die Raumgrenze zwischen Raum 23 und Raum 24 in Karte 20 horizontal ausgerichtet ist. Die erwähnten metrischen oder topologischen Maße können verwendet werden, um zu erkennen, dass der Roboter 100 mit einer falschen Karte navigiert.

Falls festgestellt wird, dass der Roboter 100 sich nicht in der verwendeten Karte befindet, gibt es verschieden Handlungsoptionen. So kann er beispielsweise die Bearbeitung abbrechen und zu seiner Ausgangsposition (z. B. Basisstation) zurückkehren, er kann die Bearbeitung fortsetzen, oder er kann eine Nachricht an den Nutzer senden und um eine Anweisung bitten. Alternativ kann der Roboter 100 eine erneute globale Selbstlokalisierung in allen dauerhaft gespeicherten Karten beginnen. Hierbei kann er insbesondere die schon befahrenen Teile der aktuellen Arbeitskopie nutzen. Beispielsweise können die Kartendaten mit einem Zeitstempel versehen sein, mit dessen Hilfe die aktuellsten Beobachtungen von älteren unterschieden werden können. Hierdurch kann der Roboter in der aktuellen Arbeitskopie Navigationsfeatures unterscheiden, die aus der dauerhaft gespeicherten Karte stammen und welche er im aktuellen Lauf beobachtet hat und somit für die Selbstlokalisierung relevant sein können.

Ein weiterer Vorteil der Arbeitskopie der dauerhaft gespeicherten Karte ist eine verbesserte Lernfähigkeit. So kann der Roboter nach Abschluss einer Aufgabe im Robotereinsatzgebiet die Kartendaten der während der Navigation aktualisierten Arbeitskopie mit der dauerhaft gespeicherten Karte vergleichen. Die hierbei erkannten Unterschiede können beispielsweise auf drei Arten behandelt werden:
- Verwerfen ohne Änderung der dauerhaft gespeicherten Karte,
- Merken ohne direkte Änderung der dauerhaft gespeicherten Karte,
- Direkter Eintrag in die dauerhaft gespeicherte Karte.

Beispielsweise kann vergessen werden, wenn Räume aufgrund zumindest einer geschlossenen Tür nicht erreichbar waren. Ebenfalls sind kleine Änderungen im Bereich der Messgenauigkeit oder aufgrund kleiner beweglicher Hindernisse (wie z.B. eine abgestellte Tasche) nicht relevant und können deshalb ignoriert (verworfen) werden. Andere Änderungen wie beispielsweise eine Änderung der Position der Basisstation sind so wesentlich, dass die dauerhaft gespeicherte Karte sofort entsprechend aktualisiert werden soll.

Ein großer Teil der Änderungen kann nicht direkt in "relevant" oder "nichtrelevant" eingeteilt werden. Diese Änderungen werden mit der dauerhaft gespeicherten Karte verknüpft und/oder abgespeichert. Beispielsweise nach jedem Durchgang werden diese so gesammelten Informationen bewertet, ob sie gelöscht werden, für weitere Analysen behalten werden oder zu einer Änderung der dauerhaft gespeicherten Karte führen. Im Folgenden werden drei Beispiele näher erläutert.

*Beispiel 1* - *Erlernen neuer Hindernisse*: Ein Nutzer kann neue Hindernisse wie ein neues Möbelstück oder ein Paket im Robotereinsatzgebiet platzieren. Diese Hindernisse würde der Roboter mit seinen Sensoren detektieren und entsprechend die Arbeitskopie der dauerhaft gespeicherten Karte anpassen. Durch einen Vergleich der Arbeitskopie mit der dauerhaft gespeicherten Karte kann der Roboter das Hindernis als neu identifizieren. Jedoch ist nicht unmittelbar klar, ob dieses Hindernis dauerhaft an dieser Stelle verbleibt (wie z.B. das neue Möbelstück) oder nur einmalig bzw. gelegentlich an dieser Stelle steht (wie z.B. das Paket). Deshalb kann gemäß einem Ausführungsbeispiel bei der ersten Beobachtung eines neuen Hindernisses (z.B. das Paket oder das neue Möbelstück), dieses in Zusammenhang mit der Karte abgespeichert werden. Beim nächsten Robotereinsatz muss jedoch nicht notwendigerweise vorausgesetzt werden, dass das zuvor gespeicherte Hindernis an jener Stelle steht, an der es zuerst beobachtet wurde. Das Hindernis ist also noch nicht so in der dauerhaft gespeicherten Karte eingetragen, dass dieses automatisch bei einem Anlegen einer neuen Arbeitskopie enthalten ist. Wird zumindest beim nächsten Einsatz das Hindernis erneut beobachtet, kann es dauerhaft in die Karte aufgenommen werden, so dass es bei jedem weiteren Robotereinsatz bekannt ist. Bevor ein neues Hindernis dauerhaft in die Karte aufgenommen wird, kann eine Anfrage an den Nutzer gestellt werden, ob dies gewünscht ist. Ist das Hindernis bei den Folgeeinsätzen nicht mehr vorhanden, so wird die damit verbundene Information verworfen (gelöscht) und die dauerhaft gespeicherte Karte bleibt unverändert. Ein analoges Vorgehen ist möglich, um dauerhaft nicht mehr vorhandene Hindernisse zu identifizieren und aus der dauerhaft gespeicherten Karte zu löschen, beispielsweise wenn der Nutzer einen Schrank aus dem Robotereinsatzgebiet entfernt.

*Beispiel* 2 - *Erlernen frei befahrbarer Gebiete*: Kleine mobile Hindernisse wie herumstehende Schuhe oder Stuhlbeine erschweren dem Roboter die Navigation, da diese in der Regel gehäuft auftreten (ein Paar Schuhe, mehrere Stühle an einem Tisch) und der Roboter diese sorgfältig umfahren muss. Deshalb kann beispielsweise die Bodenfläche eines Robotereinsatzgebietes in Bereiche eingeteilt werden, die mit hoher Wahrscheinlichkeit für den Roboter frei befahrbar sind, sowie Bereiche, die aufgrund des möglichen Vorhandenseins von kleinen mobilen Hindernissen schwer befahrbar sind. Für Übergangsfahrten von einem Teil des Einsatzgebiets in einen anderen kann der Roboter soweit möglich die frei befahrbaren Gebiete nutzen und die schwer befahrbaren Gebiete soweit wie möglich meiden. Hierdurch kann der Roboter eine höhere Geschwindigkeit fahren und komplizierte Situationen wie beispielsweise das Umfahren zahlreicher Stuhlbeine vermeiden, wodurch die Effizienz des Systems gesteigert wird.

Die konkrete Position kleiner mobiler Hindernisse ist nicht relevant, da sie sich von einem Einsatz zum nächsten leicht ändern kann. Deshalb wird diese Information nicht oder nur eingeschränkt in der dauerhaft gespeicherten Karte erfasst und/oder aktualisiert. Um jedoch die Bereiche der Karte zu erlernen, in denen mit dieser Art von Hindernissen zu rechnen ist, wird nach jedem Arbeitsauftrag anhand der Arbeitskopie der dauerhaft gespeicherten Karte die Position kleiner Hindernisse ermittelt und als Information mit der Karte verknüpft und/oder abgespeichert. Hierzu wird beispielsweise die Arbeitskopie mit der dauerhaft gespeicherten Karte verglichen und die Position aller neuen Hindernisse bestimmt, deren maximale Ausdehnung beispielsweise kleiner als die Roboterbreite ist. Durch das Zusammenfügen der Informationen aus mehreren Robotereinsätzen ergeben sich Bereiche in denen kein kleines mobiles Hindernis liegt und Bereiche in denen sie sehr dicht liegen. Diese Dichte kann beispielsweise als Maß für die Einteilung des Robotereinsatzgebiets in die Bereiche "frei befahrbar" und "schwer befahrbar" genutzt werden. Den jeweiligen Bereichen können in der Karte entsprechende Attribute zugeordnet werden. Auf ähnliche Weise können auch relative Häufigkeiten von kleinen temporär vorhandenen Hindernissen in einem Bereich des Robotereinsatzgebietes ermittelt werden. Basierend auf den ermittelten relativen Häufigkeiten kann ebenfalls eine Unterscheidung zwischen den Attributen "frei befahrbar" und "schwer befahrbar" getroffen werden.

Damit der Roboter an veränderte Gewohnheiten der menschlichen Nutzer im Robotereinsatzgebiet angepasst werden kann, wird beispielsweise zu der Information der Position kleiner mobiler Hindernissen ein Zeitstempel abgespeichert. So kann das Maß, in wie weit die Position eines kleinen mobilen Hindernis berücksichtigt wird, von der Zeit seiner Beobachtung abhängen. Beispielsweise kann die Information über die Position des kleinen mobilen Hindernisses nach einer gewissen Zeit gelöscht bzw. verworfen werden ("vergessen" werden).

*Lokalisierung in mehreren Karten* - Damit ein autonomer mobiler Roboter 100 zuverlässig in mehreren für den Roboter 100 physisch voneinander getrennten Robotereinsatzgebieten (z.B. die Etagen F1, F2 eines Hauses) mit zugehörigen dauerhaft gespeicherten Karten 10, 20 eingesetzt werden kann, muss er zuverlässig bestimmen können, ob er sich in einer der Karten und ggf. wo in einer bestimmten Karte er sich befindet (globale Selbstlokalisierung). Zur Beschleunigung der globalen Selbstlokalisierung kann eine Information über die zu verwendende Karte und eine ungefähre Startposition beispielsweise durch den Nutzer vorgegeben werden. Solch eine Startposition ist beispielsweise die Basisstation 190 bzw. in der Nähe von dieser. Wenn beispielsweise der Roboter 100 in einem Haus mit zwei Etagen eingesetzt wird (siehe Fig. 2), wobei er durch einen Menschen über eine Treppe 3 von der Etage F1 zur Etage F2 getragen wird, so kann beispielsweise "in der Nähe der Treppe" als ungefähre Startposition gewählt werden. Insbesondere kann bei der globalen Selbstlokalisierung die Prüfung möglicher Roboterpositionen auf eine Teilkarte beschränkt werden, welche beispielsweise den mit der Startposition verknüpften Raum beschreibt. Die globale Selbstlokalisierung kann so beispielsweise auf den Kartenabschnitt des Raums 11 bzw. 21 (Flur), in dem sich die Treppe 3 befindet (siehe Fig. 3), eingeschränkt werden. Jedoch ist eine erforderliche Nutzereingabe unkomfortabel für den Nutzer und potenziell fehleranfällig.

Eine globale Selbstlokalisierung ist beispielsweise notwendig, wenn der Roboter durch den Nutzer versetzt wird (d.h. sich nicht selbsttätig von einem Ort zu einem anderen bewegt). Um diese globale Selbstlokalisierung schneller und zuverlässiger zu machen, wird gemäß den im Folgenden beschriebenen Ausführungsbeispielen:
- der Beginn und das Ende des Versetzens des Roboters 100 detektiert,
- während des Versetzens Informationen über die Position und/oder den Bewegungszustand des Roboters gesammelt, und
- basierend auf diesen gesammelten Information die Position des Roboters in den gespeicherten Karten geschätzt.

In einem nächsten Schritt kann basierend auf der geschätzten Position des Roboters 100 und der zu verwendenden Karte(n) eine beschleunigte globale Selbstlokalisierung durchgeführt werden, wobei die Schätzung (d.h. die geschätzte Position des Roboters) in vergleichbarer Art und Weise genutzt werden kann, wie eine durch den Nutzer eingegebene Information. In einigen Fällen ist die Schätzung so genau, dass auf die globale Selbstlokalisierung verzichtet werden kann und die Schätzung direkt als Ausgangspunkt für die Navigation genutzt wird, wodurch der Roboter schneller mit der Durchführung seiner Aufgabe beginnen kann und somit seine Effizienz gesteigert wird. Im Rahmen der Schätzung kann beispielsweise eine Wahrscheinlichkeitsverteilung für die Position des Roboters berechnet werden. Beispielsweise ist dies eine Normalverteilung, die über einen Erwartungswert (erwartete Position) und eine Standardabweichung charakterisiert ist. Erwartungswert und Standardabweichung können ermittelt werden. Zudem kann mit Hilfe der während des Versetzens bestimmten Informationen festgestellt werden, ob der Roboter sich in dem letzten Robotereinsatzgebiet befindet oder in ein anderes versetzt wurde.

Das Detektieren des Beginns und des Endes des Versetzens kann mit Hilfe der Sensoren des Sensormoduls 130 des Roboters 100 bewerkstelligt werden. Hierbei gibt es beispielsweise die folgenden Möglichkeiten:
- Radkontaktschalter detektieren, ob der Roboter 100 Kontakt zum Boden hat.
- Boden-Abstands-Sensoren (z. B. Cliff-Sensor) detektieren, ob ein Boden unter dem Roboter 100 ist und - in einigen Ausführungsbeispielen - in welchem Abstand zum Roboter sich der Boden befindet.
- Beschleunigungssensoren messen Beschleunigungen des Roboters, wie z. B. die Beschleunigung senkrecht zur Bodenfläche beim Hochheben des Roboters, oder die Beschleunigung parallel zur Bodenfläche bei einer Verschiebung des Roboters. Um die Zuverlässigkeit der Detektion eines Anhebens bzw. Zurücksetzens des Roboters zu erhöhen, können mehrere Sensoren kombiniert werden.

Während des Versetzens werden Informationen mit den Sensoren des Sensormoduls 130 erfasst. Diese umfassen Informationen zur Position des Roboters und seiner Bewegung wie beispielsweise Beschleunigung, Geschwindigkeit, Orientierung, Winkelgeschwindigkeit und Höhe. Auf dieser Basis kann die Position des Roboters geschätzt werden. Für die Messung der genannten Informationen können z.B. integrierte MEMS Gyroskope und Beschleunigungssensoren verwendet werden. Mehrere solcher Sensoren können in einer sogenannten "Inertialen Messeinheit" (*inertial measurement unit,* IMU) zusammengefasst sein. Auf die verwendeten Sensoren wird später noch genauer eingegangen.

Um beispielsweise durch Rauschen verursachte Messfehler eines Sensors zu kompensieren, können mehrere Sensoren kombiniert werden. Hierzu sind verschiedene Methoden der Sensor und Data Fusion bekannt. Beispielsweise erfolgt die Schätzung basierend auf Sensordaten mit Hilfe eines (Erweiterten) Kalmanfilters, wobei der Erwartungswert und die Standardabweichung der Position des Roboters geschätzt werden (Normalverteilung). Hierdurch ist ein Rückschluss auf die Genauigkeit der Schätzung möglich. Alternativ kann ein Partikelfilter verwendet werden, welcher es ermöglicht nichtnormalverteilte Wahrscheinlichkeitsverteilungen zu bestimmen (siehe z.B. S. Thrun: Particle Filters in Robotics, in: Proc. of the 18th annual Conf. on Uncertainty in Artificial Intelligence (UAI 2002), San Francisco, Ca., S. 511-518, 2002*).*

Bei der Trägheitsnavigation (*inertial navigation*) werden Beschleunigung und Winkelgeschwindigkeit für alle drei Raumdimensionen gemessen und daraus (unter anderem durch Integration) eine Trajektorie des Roboters im Raum und somit auch eine Positionsänderung ermittelt. Ausgehend von der bekannten Position, an der der Roboter 100 z.B. vom Nutzer angehoben wird, kann mittels Trägheitsnavigation die Position beim späteren Absetzen des Roboters 100 geschätzt werden. Eine IMU kann dabei als Sensor dienen. Eine solche kann einen oder mehrere Beschleunigungsmesser (*accelerometer*) und Drehratensensoren (*angular rate sensor,* z. B. Gyroskope) beinhalten, welche z.B. in einem MEMS-Chip (MEMS = Mikro-Elektro-Mechanisches-Systeme) integriert sind. Auf kurzen Strecken (ca. bis zu 10 m) funktioniert die Trägheitsnavigation sehr gut. Für längere Strecken oder, um die Genauigkeit der Schätzung zu erhöhen, kann die Trägheitsnavigation mit weiteren Methoden kombiniert oder ersetzt werden. Beispielsweise kann die Genauigkeit der Trägheitsnavigation durch eine Bestimmung der Position und/oder der Geschwindigkeit zu einem oder mehr Zeitpunkten mittels einer zusätzlichen oder alternativen Messmethode verbessert werden (z. B. mittels Kalmanfilter).

Eine Möglichkeit besteht z.B. in der Nutzung eines Magnetometers, welcher in der IMU integriert sein kann. Mit diesem kann das Erdmagnetfeld und somit die Orientierung des Roboters relativ zu diesem bestimmt werden. Wird zusätzlich die Richtung der Gravitationskraft (z.B. mit Hilfe eines Neigungssensors) berücksichtigt, kann die Orientierung des Roboters relativ zu einem absoluten (raumfesten) Koordinatensystem ermittelt werden, wodurch die Genauigkeit der Positionsschätzung (Schätzung der Position des Roboters 100 beim Wiederabsetzen auf den Boden) verbessert wird.

Eine weitere Möglichkeit der Positionsbestimmung besteht darin, basierend auf der gemessenen Lageänderung (ermittelt aus Beschleunigung und Drehrate gemessen mit der IMU) des Roboters 100 die Bewegung des Nutzers zu verfolgen, welcher den Roboter gerade versetzt und den Roboter in Händen hält. So kann beispielsweise detektiert werden, ob der Nutzer geradeaus oder um eine Ecke läuft oder eine Treppe hinauf oder hinunter läuft. Wenn beispielsweise detektiert wird, dass der Nutzer die Treppe (siehe Fig. 3, Treppe 3) benutzt, so kann daraus geschlossen werden, dass das Robotereinsatzgebiet gewechselt wird (z.B. von Etage F1 auf Etage F2). Zudem ist die Position der Treppe in den meisten Haushalten eindeutig. Die Position des Roboters ist somit nach Beendigung des Treppensteigens durch den Nutzer mit einer Genauigkeit von ca. einem Meter bekannt.

Entweder der Roboter wird am Ende der Treppe abgesetzt, so dass er mit dieser Information eine Selbstlokalisierung starten kann, oder er wird weiter in einen anderen Bereich getragen, welcher mit Hilfe der zuvor besprochenen Trägheitsnavigation bestimmt wird. Andere typische Bewegungsmuster lassen sich ebenfalls mit Positionen im Raum verknüpfen, wie beispielsweise ein Geradeauslaufen in einem langgestrecktem Raum, das Abbiegen, um einen Raum durch eine Tür zu betreten, oder das Umrunden eines im Raum stehenden Hindernis wie einem Tisch. Um aus den Daten der Lageänderung auf eine Bewegungsform eines Nutzers und hieraus auf eine Position in der Karte zu schließen, werden beispielsweise Methoden des maschinellen Lernens (*Machine Learning*) wie z.B. neuronale Netze eingesetzt. Diese werden anhand realer Daten, welche in verschieden Beispielsituationen erhoben werden, trainiert, um so typische Bewegungsmuster zu erlernen und später detektieren zu können. Das Einsatzgebiet eines Roboters wird dahingehend analysiert, an welchen Stellen diese typischen Bewegungsmuster auftreten werden, also beispielsweise an welcher Stelle sich die Treppe befindet.

Eine weitere Möglichkeit der Durchführung und/oder Verbesserung der Positionsschätzung ist die Bestimmung zumindest einer Geschwindigkeitskomponente des Roboters, während er vom Nutzer versetzt wird. Dies geschieht beispielsweise mit Hilfe von Sensoren zur Erfassung der Umgebung, mit denen der Roboter im Normalbetrieb sich in seiner Umgebung orientiert. Dies ist beispielsweise ein Sensor zur Abstandsmessung wie beispielsweise ein optischer und/oder akustischer Sensor, der mittels Triangulation oder Laufzeitmessung eines ausgesandten Signals arbeitet (Triangulationssensor, Time-Of-Flight-Kamera, Laserscanner, Ultraschallsensoren). Da im angehobenen Zustand der Roboter zu anderen Hindernissen den Abstand erfasst, als auf dem Boden stehend, ist es schwierig auf dieser Basis direkt eine Position des Roboters zu ermitteln. Jedoch kann aus der Änderung der Abstände zumindest eine Geschwindigkeitskomponente des Roboters bestimmt werden. Diese Geschwindigkeit kann genutzt werden, um die in der Trägheitsnavigation bestimmte Geschwindigkeit zu korrigieren.

Ein anderes Beispiel für einen Sensor zur Erfassung der Umgebung ist eine Kamera. Mit dieser können beispielsweise mittels Kantendetektion charakteristische Merkmale der Umgebung erkannt werden. Wenn die Abstände dieser Merkmale zumindest teilweise bekannt sind, so kann durch die Änderung der Position dieser Merkmale in zwei aufeinander folgenden Aufnahmen der Kamera eine Änderung der Position des Roboters und somit zumindest eine Geschwindigkeitskomponente des Roboters ermittelt werden. Beispielsweise ist die Kamera auf den Boden gerichtet und erkennt dort einen Fliesenboden. Hierbei sind die Fugen zwischen den Fliesen erkennbar und ihr Abstand ist beispielsweise bekannt, oder der Roboter kann diese im "Normalbetrieb" (beim Befahren des Fliesenbodens) ermitteln.

Eine Kamera kann ebenfalls genutzt werden um eine direkte Positionsbestimmung vorzunehmen, indem in den Aufnahmen mittels Bild- und Objekterkennung Merkmale der Umgebung identifiziert werden, welche sich eindeutig einer bestimmten Position zuweisen lassen. So kann beispielsweise die Kamera auf den Boden gerichtet sein und dort einen Fliesenboden erkennen. Wenn diese Art von Fliesenboden nur in einem Raum zu finden ist, kann der Roboter 100 erkennen, dass er sich in dem betreffenden Raum befindet. Aus einem Übergang vom Fliesenboden zu einen anderen Bodenbelag, kann geschlossen werden, dass der Raum beispielsweise durch eine Tür verlassen wird. Aus dem Blickwinkel der Kamera und der Orientierung des Roboters 100 im Raum kann die Position des Roboters bestimmt werden. Die Orientierung des Roboters 100 im Raum kann z.B. mit Hilfe der IMU bestimmt werden, indem die Winkellage des Roboters 100 relativ zum Schwerefeld der Erde und relativ zum Magnetfeld der Erde gemessen wird.

Eine wichtige zu ermittelnde Informationen ist, ob der Roboter innerhalb seines aktuellen Robotereinsatzgebiets, in ein anderes bekanntes Robotereinsatzgebiet (für das eine Karte gespeichert ist) oder in ein neues Robotereinsatzgebiet (für das noch keine Karte existiert) versetzt wird. Hierzu wird beispielsweise bestimmt, ob die (geografische) Höhe vor und nach dem Versetzen identisch ist oder geändert wurde. Beispielsweise kann mit Hilfe der Trägheitsnavigation feststellt werden, dass der Roboter während des Versetzens um ca. 3m angehoben wurde und sich somit in einer anderen Etage befindet. Der Höhenunterschied zwischen zwei Robotereinsatzgebieten kann beispielsweise vom Nutzer eingegeben, basierend auf Standards im Einsatzland geschätzt, oder durch den Roboter nach ein- oder mehrmaligen versetzen selbsttätig erlernt werden. Der Karte eines bestimmten Robotereinsatzgebiets kann z.B. eine geografische Höhe zugeordnet werden, wobei die absolute Höhe über Normalhöhennull irrelevant ist und nur die Höhendifferenz zwischen verschiedenen Robotereinsatzgebieten beachtet wird (z.B. Robotereinsatzgebiet F1, Karte 10, Höhe 0m, Robotereinsatzgebiet F2, Karte 20, Höhe 3m). In einem Einfamilienhaus mit drei Stockwerken lässt sich z.B. das Robotereinsatzgebiet somit über eine Höhenmessung eindeutig identifizieren.

Eine Änderung der (geografischen) Höhe kann z.B. auch mit einem Sensor zur Luftdruckmessung bestimmt werden. Insbesondere kann eine kontinuierliche Luftdruckmessung und hieraus abgeleitete Höhenänderung während des Versetzens zur Korrektur und Verbesserung der Genauigkeit der Messung der Trägheitsnavigation genutzt werden. Die Genauigkeit der Messung der (geografischen) Höhe mit Hilfe des Luftdrucks kann beispielsweise durch Wetterschwankungen gestört werden. Um dies auszugleichen und eine absolute Höhenmessung zu erhalten, kann der am Roboter gemessene Luftdruck mit einer Messung einer festen Messstation verglichen werden. Die Differenz der beiden Messwerte ist für jedes Robotereinsatzgebiet unabhängig von der aktuellen Wetterlage, was eine genaue Zuordnung zu einem Robotereinsatzgebiet erlaubt. Die feste Messstation ist beispielsweise eine Wetterstation in einem Smart-Home, die mit dem Roboter über eine Kommunikationsverbindung (z. B. WLAN) verbunden ist.

Im Rahmen der Messung der Höhenänderung kann der Roboter auch detektieren, dass er auf einer kritischen Höhe über der Höhe eines Robotereinsatzgebietes abgesetzt wurde, beispielsweise dass er z.B. "nur" um die typische Höhe von Tischen und Arbeitsplatten von ca. 80-120 cm angehoben wurde. Auf diese Weise kann der Roboter z.B. detektieren, dass er sich nun auf einem Tisch befindet und z.B. eine Warnung an den Nutzer senden und/oder besonders vorsichtig (z.B. langsam) fahren.

*Selbstlokalisierung in dynamischer Umgebung* - In einem typischen Haushalt kann sich die für den Roboter relevante Umgebung ständig z.B. aufgrund der Nutzung der Räume durch den menschlichen Nutzer ändern. Der Nutzer kann z.B. Schuhe im Flur liegen lassen, Taschen oder Koffer am Boden abstellen, Türen öffnen und schließen oder Möbelstücke (z.B. Stühle) verschieben. Diese Änderungen können eine zuverlässige Selbstlokalisierung des Roboters erschweren, wenn die Unterschiede zwischen der aktuell erkannten Umgebung und den dauerhaft abgespeicherten Karten zu groß werden. Kleine mobile Objekte wie z.B. herumstehende Schuhe, eine an der Wand abgestellte Tasche oder ein verschobener Stuhl können beispielsweise beim Durchführen der Selbstlokalisierung unberücksichtigt bleiben. Bei größeren Änderungen in der Umgebung wie beispielsweise ein auf Rollen gelagerter und deshalb leicht verschiebbarer Kasten (Rollkontainer) oder eine verschlossene Tür, wodurch ein ganzer Raum nicht mehr erreichbar ist, kann jedoch eine auf einer Metrik bzw. einem Wahrscheinlichkeitsmodel basierende Selbstlokalisierung fehlschlagen. Um die Zuverlässigkeit der Selbstlokalisierung zu erhöhen, können gemäß den im Folgenden beschriebenen Ausführungsbeispielen die Unterschiede zwischen einer aktuell detektierten Umgebung des Roboters und den dauerhaft gespeicherten Karten, in denen sich der Roboter lokalisieren soll, analysiert und dahingehend bewertet werden, ob diese Unterschiede durch ein bewegliches Objekt verursacht wurden.

Es sei angemerkt, dass die folgenden Beispiele stark vereinfacht sind und nur zur Darstellung des zugrundeliegenden Prinzips dienen. Insbesondere muss der Roboter 100 nicht die gesamte Umgebung erkunden, bevor die Selbstlokalisierung erfolgreich ist, sondem nur einen Teilbereich hiervon. In dem in Figur 4 gezeigten Beispiel (Robotereinsatzgebiet F1, Karte 10) ist aufgrund eines beweglichen Hindernisses in Form einer geschlossenen Tür D der Raum 12 unzugänglich. Aufgrund des unzugänglichen Raums 12 unterscheidet sich die tatsächliche Roboterumgebung von der dauerhaft gespeicherten Karte 10, wodurch eine Selbstlokalisierung fehlschlagen kann. Wenn jedoch die Karte 10' ohne den unzugänglichen Raum 12 genutzt wird, so kann die Selbstlokalisierung erfolgreich verlaufen. Hierzu wird beispielsweise auf Basis der in der dauerhaft gespeicherten Karte 10 verzeichnete Position von Türen und/oder Raumgrenzen die bei einer geschlossenen Tür D erreichbare modifizierte Karte 10' berechnet. Dies kann mit verschiedenen Varianten geschlossener Türen erfolgen, und mit diesen so berechneten modifizierten Karten kann geprüft werden, ob die Selbstlokalisierung in diesen erfolgreich ist. Die in der dauerhaft gespeicherten Karte 10 verzeichnete Position von Türen und/oder Raumgrenzen kann beim Erstellen der Karte automatisiert ermittelt und/oder durch einen Nutzer eingetragen werden.

Alternativ kann mit einer Kamera und einer Bilderkennung direkt die geschlossene Tür D als Tür erkannt und in den zur Selbstlokalisierung vorgesehenen dauerhaft gespeicherten Karten geprüft werden, ob und wo ein Türdurchgang liegt und auf Basis dieser Information die Selbstlokalisierung durchgeführt werden.

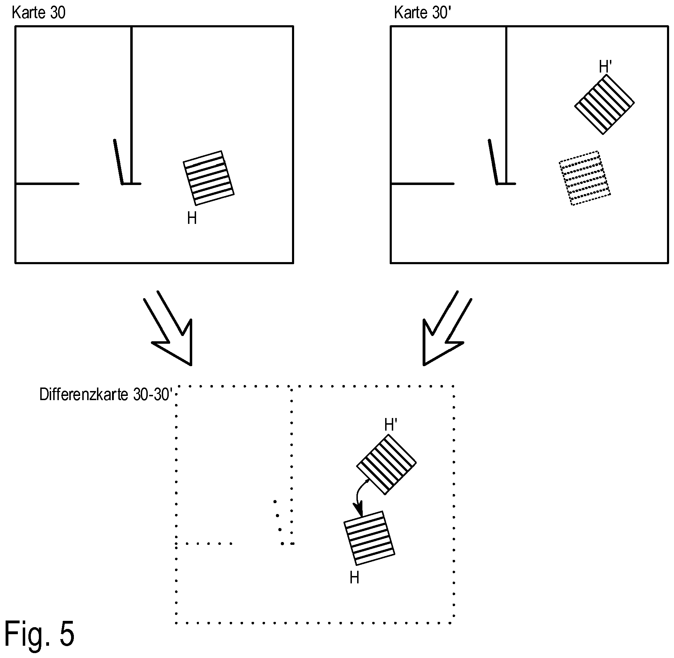

Figur 5 zeigt ein Beispiel mit einem beweglichen Hindernis H in Form eines verschiebbaren Möbelstücks wie z. B. ein auf Rollen gelagerter Kasten. Dieser ist so markant, dass er für die Navigation und Orientierung in der Umgebung genutzt wird. Durch ein Verschieben des Hindernis H kann die Selbstlokalisierung fehlschlagen, da aus Sicht des Roboters das ursprünglich in der Karte 30 verzeichnete Hindernis H fehlt und stattdessen ein neues Hindernis H' an einer zuvor freien Stelle detektiert wird (siehe Karte 30'). Durch die Analyse der Unterschiede zwischen der dauerhaft gespeicherten Karte 30 und der detektierten Umgebung 30' des Roboters kann jedoch erkannt werden, dass es sich bei dem Hindernis H' um das verschobene Hindernis H handelt. So kann beispielsweise die Differenzkarte 30-30' zwischen der dauerhaft gespeicherten Karte 30 und der erkannten Umgebung 30' gebildet werden, so dass nur das ursprünglich gespeicherte Hindernis H und das in der erkannten Umgebung verschobene Hindernis H' verbleiben. Beide unterscheiden sich nur durch ihre Position und Orientierung jedoch nicht in Form und Größe. Basierend auf dieser Tatsache kann der Roboter detektieren, dass es sich um ein (einziges, verschobenes) Hindernis handelt. Zum Wiedererkennen des Hindernisses können auch weitere Eigenschaften des Hindernisses H genutzt werden, welche der Roboter 100 mit seinem Sensormodul 130 wahrnehmen kann. Beispielsweise können mit einer Kamera Bildinformationen wie die Farbe des Hindernis H aufgenommen und zur Wiedererkennung genutzt werden.

In der dauerhaft gespeicherten Karte 30 kann das als beweglich erkannte Hindernis H als "beweglich" markiert werden und in zukünftigen Selbstlokalisierungen ignoriert oder eingeschränkt genutzt werden. Eingeschränkt genutzt bedeutet beispielsweise, dass ein Fehlen des beweglichen Hindernises H nicht zu einer Verschlechterung der Bewertung einer möglichen (geschätzten) Roboterposition führt. Wenn das bewegliche Hindernis H' (also ein Hindernis gleicher Form und/oder Größe oder sonstiger vom Roboter detektierbarer Merkmale) an einer anderen Stelle des Robotereinsatzgebiets detektiert wird, kann dies zu einer zusätzlichen Verbesserung der Bewertung einer möglichen Roboterposition und somit zu einer sicheren Selbstlokalisation führen. Darüber hinaus ist es auch möglich, dass der Nutzer bei oder nach der Kartenerstellung Hindernisse als beweglich markiert. Eine weitere Möglichkeit ist, dass der Roboter mit einer Kamera das Hindernis aufnimmt, dieses Bild mit einer Bilddatenbank vergleicht und so als bewegliches Hindernis erkennt.

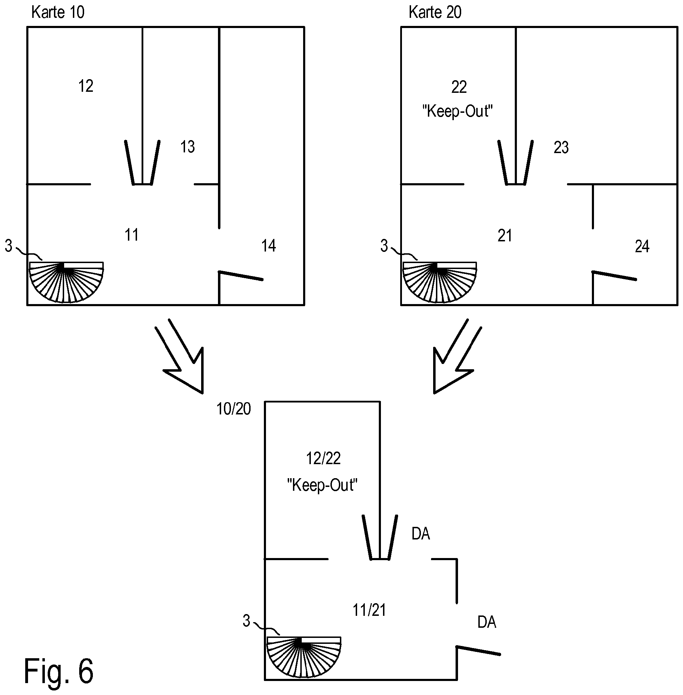

*Handling ähnlicher Karten* - Häufig sind die kartierten Robotereinsatzgebiete sich zumindest in einigen Bereichen ähnlich. Beispielsweise ist der Flur und teilweise auch die Raumaufteilung (Grundriss) in verschiedenen Etagen F1, F2 eines Hauses sehr ähnlich (vgl. Fig. 2 und 3). Eine eindeutige Unterscheidung ist für den Roboter 100 mit seiner eingeschränkten Sensorik so nur an einigen Stellen möglich. Figur 6 zeigt beispielsweise die Karten 10, 20 von zwei Etagen F1, F2 eines Hauses in denen die Flure 11, 21 und die Räume 12, 22 sich jeweils sehr ähnlich sind und eine Unterscheidung anhand des dargestellten Grundrisses nur in den Räumen 13, 23 sowie 14, 24 möglich ist.

Ein weiteres Beispiel ist der Einsatz eines Roboters z.B. in einem Flur eines Hotels (oder eines Krankenhauses oder einer Wohnanlage, etc.), bei dem viele der benachbarten Zimmer die gleiche Größe und Einrichtung haben. In diesem Fall würden innerhalb einer Karte mehrere sehr ähnliche Bereiche existieren. Wenn der Roboter in eines der Zimmer versetzt wird könnte er sich nicht eindeutig lokalisieren ohne das Zimmer zu verlassen. Jedoch ist der Zweck des Roboters, dass er möglichst schnell mit seiner Arbeit wie beispielsweise die Reinigung des Hotelzimmers beginnt. Hierzu soll er gerade nicht erst das Zimmer verlassen müssen. Zur Verbesserung der Selbstlokalisierung können gemäß den im Folgenden beschriebenen Ausführungsbeispielen die dauerhaft gespeicherten Karten auf ähnliche Bereiche, die keine eindeutige Selbstlokalisierung ermöglichen, analysiert und das Ergebnis in Verbindung mit den dauerhaft gespeicherten Karten 10, 20 gespeichert werden. Diese Analyse muss nicht laufend wiederholt werden, sondern wird beispielsweise nur durchgeführt, wenn eine neue dauerhaft gespeicherte Karte angelegt wird oder in einer bestehenden dauerhaft gespeicherten Karte Änderungen durch den Nutzer und/oder automatisiert vorgenommen werden. Die Analyse kann auf dem Roboter berechnet werden, beispielsweise in einer Arbeitspause während des Ladens seines Akkus oder dergleichen. Alternativ kann sie auch auf einem externen Computer im Haushalt des Nutzers oder im Internet durchgeführt werden.

Zur Analyse der dauerhaft gespeicherten Karten 10, 20 können zahlreiche Methoden beispielsweise aus der Mustererkennung verwendet werden. Eine Möglichkeit ist die Verwendung der Algorithmen zur Selbstlokalisierung, um die Karten und Teile hiervon auf Ähnlichkeiten zu prüfen. Insbesondere kann eine Raumaufteilung genutzt werden, um einzelne in den dauerhaft gespeicherten Karten enthaltene Räume 11, ..., 14, 21, ..., 24 auf Ähnlichkeiten zu prüfen.

Alternativ können die dauerhaft gespeicherten Karten mit Hilfe von Monte-Carlo-Simulationen auf ähnlichen Bereiche, die keine eindeutige Selbstlokalisierung ermöglichen, geprüft werden. Hierzu wird simuliert, wie die Selbstlokalisierung des Roboters abläuft, wenn er in einer Karte (z.B. Karte 10) an einer zufälligen Position platziert wird. Durch eine große Anzahl Wiederholungen können so Gebiete ermittelt werden, in denen der Roboter sich schnell und richtig lokalisiert, und in welchen es Probleme wegen vorhandener Ähnlichkeiten gibt.

Die Information über ähnliche Bereiche kann beispielsweise direkt in den dauerhaft gespeicherten Karten gespeichert werden. Alternativ kann eine (oder mehr) neue Teilkarte 10/20 erzeugt werden, der den ähnlichen Bereich umfasst. Diese Teilkarte 10/20 kann der Roboter beispielsweise für die Erledigung einer Aufgabe nutzen. Dies wird im Folgenden kurz an dem Beispiel eines Hotelflurs mit mehreren ähnlichen Hotelzimmern erklärt.

Der Nutzer trägt beispielsweise den Roboter in ein zu reinigendes Hotelzimmer, setzt ihn dort ab und weist ihm die Aufgabe "Reinige den Raum und fahre zur Basisstation" zu. Der Roboter beginnt seine Tätigkeit mit einer Selbstlokalisierung, bei welcher festgestellt wird, dass er sich in einem von mehreren ähnlichen Hotelzimmern befindet. Daraufhin wird die zu diesen Zimmern gehörende Teilkarte geladen und der Roboter beginnt auf dieser Basis mit seiner Tätigkeit. Nach Abschluss der Reinigung fährt der Roboter aus dem gerade gereinigten Hotelzimmer heraus (wenn möglich) und setzt die Selbstlokalisierung fort. Hierdurch wird seine Position innerhalb der dauerhaft gespeicherten Karte bestimmt, welche die mehreren ähnlichen Hotelzimmer enthält. Somit kann festgestellt werden, welches Hotelzimmer gereinigt wurde. Eine entsprechende Information kann beispielsweise an das Hotelmanagement gesandt werden. Zudem kann auf Basis der dauerhaft gespeicherten Karte beispielsweise festgestellt werden, wo sich die Basisstation befindet und wie der Roboter zu dieser gelangt, um seinen Arbeitsauftrag abzuschließen. Speziell bei Hotelzimmern kann der Roboter seine Position beispielsweise mit Hilfe der für Hotelgäste gedachten Markierung der Zimmer durch Zimmernummern mittels einer Kamera und passender Bilderkennungssoftware bestimmen. Diese Zimmernummern können als Landmarken dienen und/oder in der Karte des betreffenden Robotereinsatzgebietes als Attribute (jeder Kartenbereiche, die die Räume repräsentieren, oder des Eingangsbereichs der Räume) hinterlegt sein.

Bei dem in Fig. 6 dargestellten Beispiel kann auf gleiche Weise vorgegangen werden. Die oben erwähnte Analyse der Karten 10 und 20 im Hinblick auf Ähnlichkeiten ergibt z.B. eine Teilkarte 10/20, die beispielsweise die Räume 11/21 und 12/22 enthalten kann. So kann beispielsweise der Roboter 100 von einem Nutzer im Flur 11 abgesetzt werden und die Aufgabe "Reinige" zugewiesen bekommen. Beim Versuch der Selbstlokalisierung des Roboters wird festgestellt, dass er sich in Raum 11 der Karte 10 oder Raum 21 der Karte 20 befindet. Dann kann die Teilkarte 10/20 geladen werden, welche die Räume 11 und 21 als Raum 11/21 repräsentiert und mit der Reinigung des Flurs beginnen. Nach dem Abschluss der Reinigung des Flurs kann der Roboter sich in den nächsten Raum (z.B. Raum 24) bewegen, um dort seine Tätigkeit fortzusetzen. In diesem Raum wird die Selbstlokalisierung dahingehend fortsetzen, in dem geprüft wird, in welchen der beiden fraglichen Karten 10, 20 sich der Roboter befindet (im Beispiel des Raums 24 wäre das die Karte 20).

Für den Nutzer kann es die Möglichkeit geben, einzelne Bereiche und/oder ganze Räume von einer automatischen Befahrung und/oder Durchführung eines Arbeitsauftrags durch den Roboter auszuschließen ("Keep-Out-Area"). Beispielsweise kann der Raum 22 ein Kinderzimmer sein, und der Nutzer will keine automatische Reinigung durch den Roboter, da hier häufig Kleinteile wie Spielzeug herumliegen. Dabei stellt sich das Problem, dass es in den Karten 10 und 20 mit den Räumen 12 und 22 einen ähnlichen Bereich gibt, der jedoch unterschiedlich gehandhabt werden soll. Gemäß dem hier beschriebenen Ausführungsbeispiel kann diese Information zur Handhabung von Teilbereichen (z.B. die Information "keep out" zum Raum 22), welche in Verbindung mit den dauerhaft gespeicherten Karten 10 und 20 gespeichert sind, mit einer Priorität verknüpft werden und während der Arbeit mit der Teilkarte entsprechend berücksichtigt werden. Dabei kann eine Information, die zur Vermeidung eines Schadens durch den Roboter (wie beispielsweise eine "Keep-Out-Area") dient, eine höhere Priorität erhalten. In dem vorhergehenden Beispiel würde der Roboter den in der Karte verzeichneten Raum 12/22 nicht befahren und hierfür die Information "Keep-Out-Area" in die Teilkarte 10/20 übernehmen. Erst nachdem eindeutig festgestellt wurde, dass der Roboter sich in Karte 10 befindet, würde eine automatische Reinigung des nun als Raum 12 identifizierten Raumes beginnen.

Wenn festgestellt wurde, dass es innerhalb der dauerhaft gespeicherten Karten ähnliche Bereiche gibt, die eine zuverlässige Selbstlokalisierung erschweren, so kann ebenfalls geprüft werden, in welchen Bereichen deutliche Unterschiede bestehen. Diese Bereiche können bei Bedarf gezielt vom Roboter angefahren werden, um so eine schnelle, eindeutige und zuverlässige Selbstlokalisierung zu erhalten. Beispielsweise ist in den in Fig. 6 gezeigten Karten 10 und 20 aufgrund der Größenunterschiede eine eindeutige Lokalisierung in den Räumen 13, 23 und 14, 24 möglich. Dies ist in der Teilkarte 10/20 durch die Markierung DA vermerkt.

## Patentansprüche

1. Verfahren zur Steuerung eines autonomen mobilen Roboters (100), das folgendes aufweist:
Speichern und Verwalten von zumindest einer Karte (10, 20), die zumindest einem Robotereinsatzgebiet (F1, F2) zugeordnet ist,
Entgegennahme eines Auftrags zur Durchführung einer Aufgabe durch den Roboter (100), wobei die Aufgabe zu einer ersten Gruppe von Aufgaben oder zu einer zweiten Gruppe von Aufgaben gehört
Navigieren des Roboters (100) durch das Robotereinsatzgebiet (F1, F2) zur Durchführung der Aufgabe,
wobei Aufgaben aus der ersten Gruppe mit einer kartenbasierten Information verknüpft sind, und wobei der Roboter (100) bei der Durchführung der Aufgabe anhand der gespeicherten Karte (10, 20) navigiert, auf die sich die kartenbasierte Information bezieht, und
wobei Aufgaben aus der zweiten Gruppe nicht mit einer kartenbasierten Information verknüpft sind,
wobei der Roboter (100) bei der Durchführung einer Aufgabe aus der zweiten Gruppe vor und/oder während der Durchführung der Aufgabe eine neue Karte erstellt, wobei der Roboter (100) einen Versuch einer globalen Selbstlokalisierung durchführt, wobei bei einer globalen Selbstlokalisierung die neue Karte auf Übereinstimmung mit mindestens einer der gespeicherten Karten (10, 20) überprüft wird und bestimmt wird, ob und wo sich der Roboter in mindestens einer der gespeicherten Karten (10, 20) befindet.

2. Verfahren gemäß Anspruch 1,
wobei der Roboter (100) im Fall einer erfolgreichen Selbstlokalisierung die zugeordnete Karte (10, 20) zur Navigation nutzt.

3. Verfahren gemäß Anspruch 1 oder 2,
wobei nach erfolgter Selbstlokalisierung die in der Karte (10, 20) als nicht befahrbar markierten Bereiche berücksichtigt werden.

4. Verfahren gemäß Anspruch 1,
wobei nach mehrdeutiger Selbstlokalisierung die in der Karte (10, 20) als potentiell nicht befahrbar markierten Bereiche berücksichtigt werden.

5. Verfahren gemäß einem der Ansprüche 1 bis 2,
wobei der Roboter (100) bei der Durchführung von Aufgaben aus der ersten Gruppe nur die in der Karte als befahrbar markierten Bereiche befährt und bei der Durchführung von Aufgaben aus der zweiten Gruppe alle für ihn erreichbaren Bereiche befährt.

6. Verfahren gemäß einem der Ansprüche 1 bis 5, wobei die kartenbasierte Information:
eine bestimmte von mehreren Karten oder
einen oder mehrere Bereiche einer bestimmten Karte oder
einer konkreten Position in einer bestimmten Karte bezeichnet.

7. Steuereinheit für einen autonomen mobiler Roboter (100), die folgendes aufweist:
zumindest einen Prozessor und zumindest einen Speicher mit Instruktionen, welche, wenn sie auf dem Prozessor ausgeführt werden, den Roboter (100) dazu veranlassen, eines der Verfahren gemäß Anspruch 1 bis 6 auszuführen.

## Claims

1. A method for controlling an autonomous mobile robot (100), having:
storing and managing at least one map (10, 20) which is assigned to at least one robot deployment area (F1, F2),
receiving an order for the robot (100) to perform a task, the task belonging to a first group of tasks or to a second group of tasks,
navigating the robot (100) through the robot deployment area (F1, F2) to perform the task,
wherein tasks from the first group are linked to map-based information, and wherein, when performing the task, the robot (100) navigates using the stored map (10, 20) to which the map-based information relates, and
wherein tasks from the second group are not linked to map-based information,
wherein, when performing a task from the second group, the robot (100) creates a new map prior to and/or during performance of the task, wherein the robot (100) performs an attempt at global self-localization, wherein, in the event of global self-localization, the new map is checked for correspondence with at least one of the stored maps (10, 20), and it is determined whether and where the robot is located on at least one of the stored maps (10, 20).

2. The method according to claim 1,
wherein the robot (100) uses the assigned map (10, 20) for navigation in the event of successful self-localization.

3. The method according to claim 1 or 2,
wherein, after self-localization has been performed, the areas marked as impassable on the map (10, 20) are taken into account.

4. The method according to claim 1,
wherein, after ambiguous self-localization, the areas marked as potentially impassable on the map (10, 20) are taken into account.

5. The method according to any one of claims 1 to 2,
wherein, when performing tasks from the first group, the robot (100) only travels through the areas marked as passable on the map and, when performing tasks from the second group, travels through all areas reachable by it.

6. The method according to any one of claims 1 to 5, wherein the map-based information identifies:
a specific one of several maps, or
one or more areas of a specific map, or
a particular position on a specific map.

7. A control unit for an autonomous mobile robot (100), having:
at least one processor and at least one memory with instructions which, when executed on the processor, cause the robot (100) to execute one of the methods according to claims 1 to 6.

## Revendications

1. Procédé de commande d'un robot mobile autonome (100), qui comprend :
le stockage et la gestion d'au moins une carte (10, 20) qui est associée à au moins une zone d'intervention du robot (F1, F2),
la réception, par le robot (100), d'un ordre d'exécution d'une tâche, dans lequel la tâche appartient à un premier groupe de tâches ou à un second groupe de tâches
la navigation du robot (100) à travers la zone d'intervention du robot (F1, F2) pour l'exécution de la tâche,
dans lequel les tâches du premier groupe sont liées à une information cartographique, et dans lequel le robot (100) navigue lors de l'exécution de la tâche en utilisant la carte stockée (10, 20) à laquelle se rapporte l'information cartographique, et
dans lequel les tâches du second groupe ne sont pas liées à une information cartographique,
dans lequel le robot (100) crée une nouvelle carte lors de l'exécution d'une tâche du second groupe avant et/ou pendant l'exécution de la tâche, dans lequel le robot (100) effectue une tentative d'auto-localisation globale, dans lequel en cas d'auto-localisation globale de la nouvelle carte, la nouvelle carte est vérifiée quant à sa concordance avec au moins l'une des cartes stockées (10, 20) et il est déterminé si et où le robot se trouve dans au moins l'une des cartes stockées (10, 20).

2. Procédé selon la revendication 1,
dans lequel le robot (100) utilise la carte associée (10, 20) pour la navigation en cas d'auto-localisation réussie.

3. Procédé selon la revendication 1 ou 2,
dans lequel, après une auto-localisation réussie, les zones marquées comme non praticables sur la carte (10, 20) sont prises en compte.

4. Procédé selon la revendication 1,
dans lequel, après une auto-localisation ambiguë, les zones marquées comme potentiellement non praticables sur la carte (10, 20) sont prises en compte.

5. Procédé selon l'une des revendications 1 à 2,
dans lequel le robot (100), lors de l'exécution de tâches du premier groupe, ne parcourt que les zones marquées comme praticables sur la carte et lors de l'exécution de tâches du second groupe, parcourt toutes les zones qu'il peut atteindre.

6. Procédé selon l'une des revendications 1 à 5, dans lequel l'information cartographique indique :
une carte spécifique parmi plusieurs ou
une ou plusieurs zones d'une carte spécifique ou
une position précise sur une carte spécifique.

7. Unité de commande d'un robot mobile autonome (100), qui comprend :
au moins un processeur et au moins une mémoire avec des instructions qui, lorsqu'elles sont exécutées sur le processeur, amènent le robot (100) à exécuter l'un des procédés selon les revendications 1 à 6.
